(19) Europäisches Patentamt
European Patent Office
Office européen des brevets

(11) **EP 1 244 879 B1**

(12) **EUROPÄISCHE PATENTSCHRIFT**

(45) Veröffentlichungstag und Bekanntmachung des Hinweises auf die Patenterteilung:
**05.09.2012 Patentblatt 2012/36**

(21) Anmeldenummer: **99965489.0**

(22) Anmeldetag: **17.12.1999**

(51) Int Cl.:
***F16D 65/16*** (2006.01)      ***F16D 59/02*** (2006.01)
***F16F 1/32*** (2006.01)

(86) Internationale Anmeldenummer:
**PCT/EP1999/010081**

(87) Internationale Veröffentlichungsnummer:
**WO 2001/044677 (21.06.2001 Gazette 2001/25)**

(54) **ZUSPANNEINRICHTUNG FÜR RADBREMSEN**

FORCE APPLYING DEVICE FOR WHEEL BRAKES

ACTIONNEUR POUR UN FREIN DE ROUE

(84) Benannte Vertragsstaaten:
**DE FR IT SE**

(43) Veröffentlichungstag der Anmeldung:
**02.10.2002 Patentblatt 2002/40**

(73) Patentinhaber: **WABCO GmbH**
**30453 Hannover (DE)**

(72) Erfinder:
- **ISERNHAGEN, Fritz**
  **D-31515 Wunstorf (DE)**
- **FELDMANN, Joachim**
  **D-31535 Neustadt (DE)**
- **GRADERT, Detlef**
  **D-29336 Nienhagen (DE)**
- **REINECKE, Erich**
  **D-31303 Burgdorf (DE)**
- **MACKE, Wlodzimierz**
  **D-82140 Olching (DE)**
- **ANTONY, Paul**
  **D-67550 Worms (DE)**

(74) Vertreter: **Schrödter, Manfred et al**
**WABCO GmbH**
**Postfach 91 12 62**
**30432 Hannover (DE)**

(56) Entgegenhaltungen:
**EP-B- 0 644 358      WO-A-90/14979**
**DE-A- 3 824 812      DE-C- 944 351**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft eine Zuspanneinrichtung für Radbremsen. Eine derartige Zuspanneinrichtung ist aus der EP 0 644 358 B1 bekannt.

Bei der bekannten Zuspanneinrichtung werden für den Fall einer zugespannten Scheibenbremse die Bremsbeläge und das z. B. als Schwimmsattel ausgebildete Gehäuse für die Zuspannung elastisch verformt. Beläge und Gehäuse bilden so ein Kraftaufnahmesystem, in dem die elastische Verformungsenergie dieser beiden Teile gespeichert ist.

Zur Zuspannung der Scheibenbremse wird bei der bekannten Zuspanneinrichtung aus einem als Federspeicher ausgebildeten und als Kraftpatrone bezeichneten Krafterzeuger Energie auf das Kraftaufnahmesystem übertragen. Zur Energieübertragung ist ein Hebel vorgesehen, der ein Hebellager aufweist, das sich in Bezug auf das Kraftaufnahmesystem an ortsfester Stelle befindet. Der Hebel weist zwei Kraftangriffspunkte auf: Einen ersten Kraftangriffspunkt mit vorgegebener Hebellänge, der auf das Kraftaufnahmesystem einwirkt und einen zweiten Kraftangriffspunkt an einer veränderbaren Position des Hebelarms für die Einwirkung der Kraftpatrone. Zur Veränderung des zweiten Kraftangriffspunktes ist die Kraftpatrone um einen Drehpunkt schwenkbar ausgeführt, wobei eine Verstellvorrichtung zur Einstellung der gewünschten Position des zweiten Kraftangriffspunktes vorgesehen ist.

Die bekannte Einrichtung ermöglicht es, bei einer Umkehr des Arbeitshubes, d. h. bei einer Verringerung der Bremsen-Zuspannung, einen Teil der im Kraftaufnahmesystem enthaltenen elastischen Verformungsenergie zurückzugewinnen und in den energiespeichernden Krafterzeuger einzuspeisen, wodurch sich die Energie im Krafterzeuger um den Anteil der zurückgewonnenen Verformungsenergie erhöht. Mit diesem Prinzip der Energierückgewinnung findet ein wechselseitiges Umspeichern von Energie aus dem Krafterzeuger zum Kraftaufnahmesystem einerseits und von Energie aus dem Kraftaufnahmesystem zum Krafterzeuger andererseits statt. Hierdurch wird bei der bekannten Einrichtung der Wirkungsgrad verbessert.

Die bekannte Einrichtung weist jedoch den Nachteil auf, daß beim Verschwenken der Kraftpatrone [nicht ortsfester Krafterzeuger], die als Federspeicher ausgebildet ist und aufgrund der starken Federn eine erhebliche Masse aufweist, eine im Massenschwerpunkt der Kraftpatrone angreifende Trägheitskraft auftritt, die sich nachteilig auf die Geschwindigkeit auswirkt, mit der die Bremse verstellt werden kann; hohe Vestellgeschwindigkeiten der Bremse werden z. B. für den Einsatz von Antiblockiereinrichtungen angestrebt.

Aus der DE 37 18 944 C2 ist ein Hebelgetriebe als Teil eines Bremsdruckmodulators einer hydraulischen Bremseinrichtung für eine Radbremse bekannt.

Das Hebelgetriebe ist als Anordnung von zwei an einander gegenüberliegenden Gestellteilen drehbar gelagerten Hebeln aufgebaut, wobei die Hebel an den Hebelseiten, an denen ein Hebel dem jeweils anderen Hebel zugewandt ist, mit speziell ausgestalteten Rollkurven versehen sind, zwischen denen ein Rollkörper gelagert ist. Beide Hebel werden an derjenigen Hebelseite, die dem jeweils anderen Hebel abgewandt ist, an insgesamt zwei Kraftangriffspunkten, d. h. an je einem Kraftangriffspunkt pro Hebel, über zwei Druckstangen mit Kraft beaufschlagt, wodurch eine der beiden Druckstangen einen Getriebe-Antrieb und die andere Druckstange einen Getriebe-Abtrieb bildet. Durch die Kraftbeaufschlagung werden beide Hebel gegen den Rollkörper gedrängt, der sich rollend unter den unten erläuterten Umständen auf den Rollkurven beider Hebel bewegen kann.

Bei bestimmten durch die Druckstangen am Getriebe-Antrieb und am Getriebe-Abtrieb eingeleiteten Kräften hat der Rollkörper eine ganz bestimmte stabile Position zwischen den Rollkurven beider Hebel eingenommen; hierdurch ist die für diese bestimmte Rollkörper-Position gültige Kraftübersetzung des Getriebes bestimmt. Der Gleichgewichtszustand für die angenommenen Kräfte an der Antriebs- und Abtriebs-Seite des Getriebes ist genau bei dieser Rollkörper-Position erreicht.

Bei einer Veränderung von mindestens einer dieser beiden Kräfte ändert sich der Gleichgewichtszustand, und als Folge dessen wird einer von beiden Hebeln im Uhrzeigersinn und der andere der beiden Hebel im Gegenuhrzeigersinn verschwenkt. Im Rahmen der gegensinnigen Verschwenkung beider Hebel bewegt sich der Rollkörper längs der Rollkurven rollend an einen anderen Ort, an dem er wiederum eine stabile Lage einnimmt, wobei dieser andere Ort dem neuen Gleichgewichtszustand nach der Veränderung der Kraftverhältnisse entspricht. Bei diesem Getriebe wird also die Verstellung durch Änderung der Getriebe-Antriebs-Kraft, der Getriebe-Abtriebs-Kraft oder beider Kräfte vorgenommen, und die örtliche Lage des Rollkörpers relativ zum Gestell wird durch diese Kräfte bestimmt.

Das Getriebe ist in die Bremseinrichtung derart integriert, daß die Getriebe-Abtriebs-Druckstange mit einer Konstant-Kraftquelle verbunden ist und die Getriebe-Antriebs-Druckstange als Plunger eines Hydraulikzylinders im Hydraulikkreis ausgebildet ist, wobei der Plunger im Falle einer Radblockierung den Druck in den Radbremszylindern moduliert. Über das Getriebe ist die Konstant-Kraftquelle am Getriebe-Abtrieb mit dem Bremssystem am Getriebe-Antrieb verbunden, welches hinsichtlich der Betätigung als Energiespeicher wirkt, da die zur Druckerhöhung im System notwendige Arbeit weitestgehend als elastische Spannung gespeichert ist. Über das Getriebe kann die Energie im Bremssystem reversibel genutzt werden.

Die erwähnten Rollkurven der beiden Hebel sind so ausgestaltet, daß bei vorhandensein einer Verstelleinrichtung die mechanische Arbeit auf der Antriebsseite des Getriebes gleich der negativen Arbeit auf der Abtriebsseite ist.

Das Getriebe der letztgenannten Schrift kann jedoch nicht als variables Getriebe für eine eingangs genannte Zuspanneinrichtung der Bremse selbst vorgesehen werden, da dieses Getriebe keine Möglichkeit bietet, eine veränderbare Getriebe-Übersetzung von außen vorzugeben.

Der Erfindung liegt deshalb die Aufgabe zugrunde, für eine Zuspanneinrichtung der eingangs genannten Art eine weitere Ausgestaltung anzugeben, die unter Beibehaltung der Vorteile der Energierückgewinnung keine nachteiligen Auswirkungen auf die Geschwindigkeit aufweist, mit der die Bremse verstellt werden kann.

Diese Aufgabe wird durch die im Patentanspruch 1 angegebene Erfindung gelöst. Insbesondere ist das Merkmal m) zu erwähnen, das bei einer Zuspanneinrichtung mit Verstelleinrichtung nicht bekannt ist, auch aus der DE-C- 944 351 nicht, der zudem das Merkmal c) des Anspruchs 1 fehlt. Weiterbildungen und vorteilhafte Ausführungsbeispiele der Erfindung sind in den Unteransprüchen 2 bis 23 angegeben.

Die Erfindung baut auf der Erkenntnis auf, daß die Hebelanordnung nach der bekannten, eingangs genannten Einrichtung eine bestimmte Ausführungsform für ein mechanisches Getriebe mit variablem Übersetzungsverhältnis darstellt. Die erfindungsgemäße Lösung stellt ebenfalls ein mechanisches Getriebe mit variablem Übersetzungsverhältnis dar, bei dem jedoch ein Verschwenken des Krafterzeugers nicht erforderlich ist.

Ein Getriebe mit zwei Hebeleirichtungen ist durch die DE-OS-29 17 936 bekannt; dabei handelt es sich aber im gegensatz zur vorliegenden erfindung um eine Getriebeanwendung für ein Gerät ganz anderer Art, nämlich um eine Anwendung für einen druckmittelgesteuerten automatischlastabhängigen Bremskraftregler.

Die Erfindung wird im folgenden anhand eines Ausführungsbeispiels, das in den Zeichnungen dargestellt ist, näher erläutert.

In den Zeichnungen sind soweit möglich für gleichartige Teile identische Bezugszeichen verwendet, so daß mit der Erläuterung eines Teils in einer Zeichnung dieses Teil auch in anderen Zeichnungen beschrieben ist.

Dabei zeigen:

Fig. 1    Die Zuspanneinrichtung in einer Ausgestaltung mit zwei Hebeln und mit der grundsätzlichen Ausführungsform einer verschieblichen Stütze,

Fig. 2    die Zuspanneinrichtung nach Fig. 1, bei der die verschiebliche Stütze als eine Anordnung von Rollen ausgebildet ist,

Fig. 3    eine konstruktive Ausgestaltung der Zuspanneinrichtung nach Fig. 2,

Fig. 4    die Zuspanneinrichtung in einer Ausgestaltung mit zwei Hebeln, wobei ein Hebel als lenkergeführtes Element ausgebildet ist,

Fig. 5    die Zuspanneinrichtung in einer Ausgestaltung mit einem Hebel und einem geradegeführten Element,

Fig. 6    die Zuspanneinrichtung nach Fig. 5, bei der das geradegeführte Element in den Krafterzeuger integriert ist,

Fig. 7    eine Darstellung der Grundgeometrie einer Zuspanneinrichtung nach Fig. 1 zum rechnerischen Ermitteln einer energieoptimierten Kontur,

Fig. 8    den Verlauf der Kraftverstärkung als Funktion des Verstellweges bei unterschiedlichen Parameter-Einstellungen.

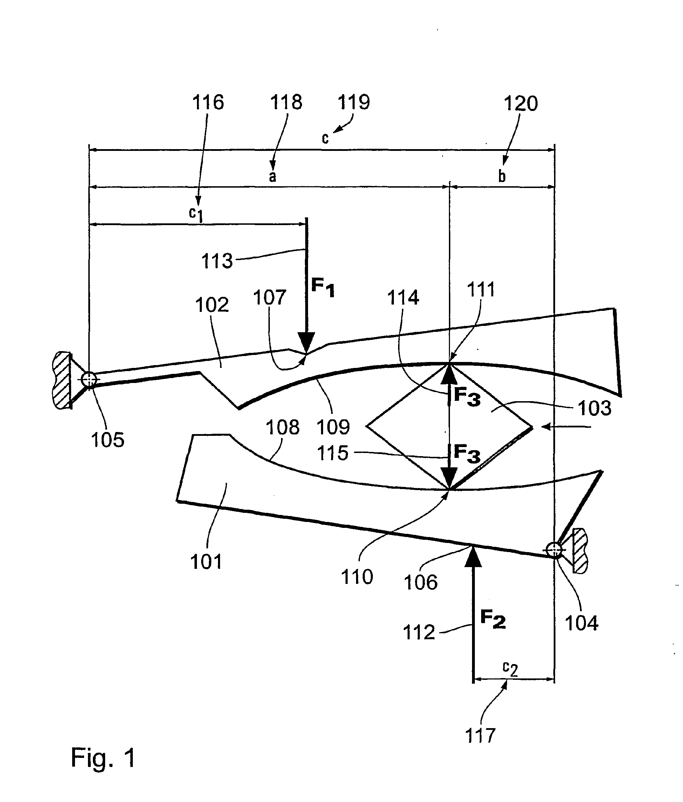

In Fig. 1 sind folgende mechanische Glieder vorgesehen:

Ein an einem gehäusefesten Drehpunkt (104) gelagerter erster Hebel (101), der über einen hebelfesten Gelenkpunkt (106) [Kraftangriffspunkt] kraftschlüssig mit einem in Fig. 1 nicht dargestellten, die Kraft $F_2$ (112) als Reaktionskraft erzeugenden Kraftaufnahmesystem verbunden ist;

ein in Form eines an einem gehäusefesten Drehpunkt (105) gelagerten zweiten Hebels ausgeführtes Zwischenglied, das über einen hebelfesten Gelenkpunkt (107) [Kraftangriffspunkt] mit einem ebenfalls in Fig. 1 nicht dargestellten, die Kraft $F_1$ (113) erzeugenden Krafterzeuger kraftschlüssig verbunden ist;

eine über eine in Fig. 1 nicht dargestellte Verstelleinrichtung verschiebliche Stütze (103), die sich abstützend über einen Gelenkpunkt (110) kraftschlüssig mit dem ersten Hebel (101) und sich abstützend über einen Gelenkpunkt (111) kraftschlüssig mit dem als zweiten Hebel (102) ausgebildeten Zwischenglied verbunden ist.

3

Die erläuterte Anordnung der mechanischen Glieder (101), (102) und (103) bildet mit ihren gelenkigen Verbindungen einen Mechanismus. Mit der Festlegung eines Antriebs des Mechanismus durch die Kraft $F_1$ (113) und eines Abtriebs durch die Reaktionskraft $F_2$ (112) ist ein Getriebe definiert.

In Fig. 1 ist die Kraft $F_1$ (113) in der gezeichneten Richtung als eine positive auf den zweiten Hebel (102) drückend wirkende Kraft des Krafterzeugers angenommen, wodurch auf den zweiten Hebel (102) ein rechtsdrehendes Moment ausgeübt wird. Aufgrund dieser Krafteinwirkung wird am Gelenkpunkt (111) eine Reaktionskraft $F_3$ (114) erzeugt, die zur Folge hat, daß eine Kraft gleicher Größe $F_3$ (115) am Gelenkpunkt (110) als positive, drückend wirkende Kraft auf den Hebel (101) einwirkt, wodurch an diesem Hebel ein linksdrehendes Moment erzeugt wird. Das Kraftaufnahmesystem erzeugt am Gelenkpunkt (106) die in der gezeichneten Richtung positiv wirkende Reaktionskraft $F_2$ (112), wodurch auf den ersten Hebel (101) ein rechtsdrehendes Moment ausgeübt wird. Für das Getriebe ist ein Gleichgewichtszustand erreicht, wenn sowohl am ersten Hebel (101) als auch am zweiten Hebel (102) ein Momentengleichgewicht herrscht.

Mit dem Abstand [Kraftarm] $c_1$ (116) zwischen der Wirkungslinie der Kraft $F_1$ (113) und dem Drehpunkt (105) und dem Abstand a (118) zwischen der Wirkungslinie der Kraft $F_3$ (114) und dem Drehpunkt (105) ergibt sich das Momentengleichgewicht für den zweiten Hebel (102):

$$F_1 \cdot c_1 = F_3 \cdot a \qquad\qquad [1]$$

Mit dem Abstand $c_2$ (117) zwischen der Wirkungslinie der Kraft $F_2$ (112) und dem Drehpunkt (104) und dem durch die Verstelleinrichtung bestimmten Abstand b (120) zwischen der Wirkungslinie der Kraft $F_3$ (115) und dem Drehpunkt (104) ergibt sich das Momentengleichgewicht für den ersten Hebel (101):

$$F_2 \cdot c_2 = F_3 \cdot b \qquad\qquad [2]$$

Mit dem Abstand c (119) zwischen den Drehpunkten (104) und (105) ergibt sich:

$$a = c - b \qquad\qquad [3]$$

Aus den Gleichungen [1] und [2] läßt sich die Kraft $F_3$ eliminieren; mit dem Einsetzen von Gleichung [3] ergibt sich dann ein direkter Zusammenhang zwischen den Kräften $F_2$ und $F_1$:

$$F_2 = F_1 \cdot \frac{c_1}{c_2} \cdot \frac{b}{a} = F_1 \cdot \frac{c_1}{c_2} \cdot \frac{b}{c - b} \qquad\qquad [4]$$

Am Kraftaufnahmesystem, nämlich an denjenigen Teilen, die durch ihre elastische Verformung die auf die Bremsscheibe wirkende Bremskraft erzeugen, wird eine Zuspannkraft von der Größe $F_2$ (112) erzeugt, die sich aus der Kraft $F_1$ (113) des Krafterzeugers nach der Gleichung ergibt, wobei der in dieser Formel verwendete Abstand b (120) durch den Ort der Stütze (103) relativ zum Gehäuse bestimmt ist; der Ort der Stütze (103) bestimmt sowohl den Ort der Krafteinleitung vom zweiten Hebel (102) auf die Stütze (103) am Gelenkpunkt (111) als auch den Ort der Kraftabgabe von der Stütze (103) zum ersten Hebel (101) am Gelenkpunkt (110).

Die Anordnung stellt also ein variables Getriebe dar, bei dem das Übersetzungsverhältnis, das die Kraftübersetzung darstellt, durch den Ort der Stütze (103) bestimmt ist. Nach Gleichung [4] berechnet sich das Übersetzungsverhältnis $F_2/F_1$, nämlich die Kraübersetzung i, zu:

$$i = \frac{F_2}{F_1} = \frac{c_1}{c_2} \cdot \frac{b}{c-b} = \frac{c_{10}}{c_2} \cdot \cos\varphi \cdot \frac{b}{c-b} \qquad [5]$$

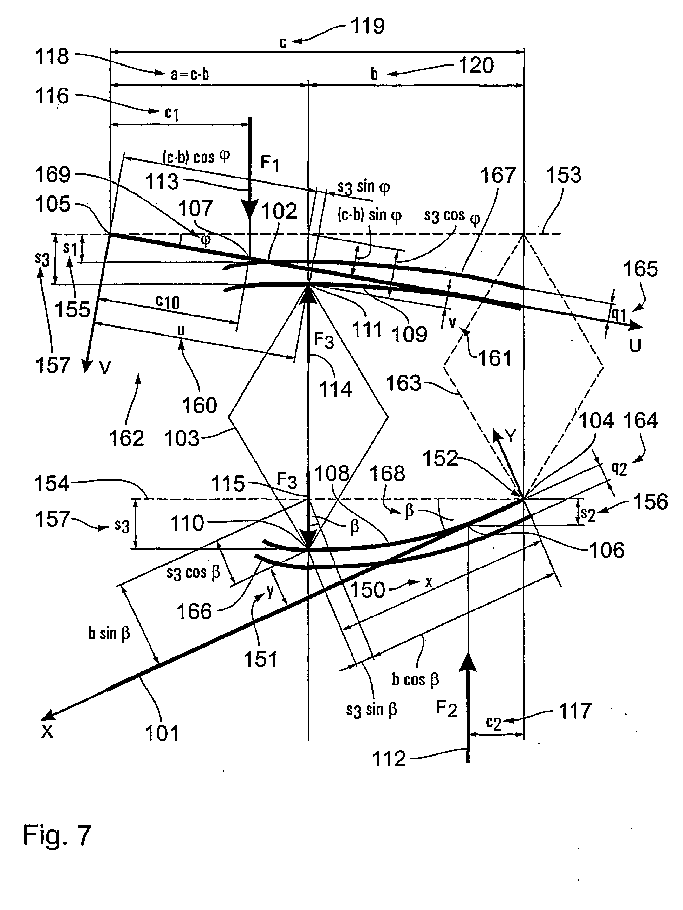

Der Winkel $\varphi$ ist dabei der Drehwinkel des zweiten Hebels (102) gegenüber der Horizontalen, und die Größe $c_{10}$ ist der feste am Hebel gemessene Abstand des Gelenkpunktes (107) zum Drehpunkt (104) [vergl. Fig. 7].

Die beiden Hebel (101) und (102) sind auf denjenigen Seiten, die dem jeweils anderen Hebel zugewandt sind, mit speziell ausgebildeten hebelfesten Konturen ausgestattet; für den ersten Hebel (101) ist dies eine Kontur (108), und für den zweiten Hebel (102) ist es eine Kontur (109).

Bei einer Getriebeverstellung werden die Hebel (101) und (102) verschwenkt. Mit steigender Zuspannung steigt die Kraft $F_2$ (112) an, wodurch eine Drehung des ersten Hebels (101) um den Drehpunkt (104) erfolgt. Durch die kraftschlüssige Kopplung des ersten Hebels (101) über die verschiebliche Stütze (103) hat eine Drehung des ersten Hebels (101) natürlich auch einen Einfluß auf den zweiten Hebel (102). Wie unten erläutert, soll sich der zweite Hebel (102) gegensinnig zum ersten Hebel (101) drehen, d. h. bei einer Drehung des ersten Hebels im Gegenuhrzeigersinn [steigende Zuspannung] soll sich der zweite Hebel (102) im Uhrzeigersinn drehen.

Bei Vernachlässigung aller Reibungseinflüsse sind die Richtungen der Kräfte, die von den Hebeln (101) und (102) auf die Stütze (103) eingeleitet werden, durch die Normalen der Konturen (108) und (109) in den Gelenkpunkten (110) und (111) bestimmt. Die Größe der Kräfte in den Gelenkpunkten bestimmt zusammen mit dem Winkel zwischen den Gelenkpunkt-Normalen die Rückwirkungskraft auf die Verstelleinrichtung.

Die genannten Verdrehungen haben also auch einen Einfluß auf diese Rückwirkungskraft. Die Konturen (108) und (109) bestimmen also den Verlauf der Rückwirkungskraft über den Verstellweg; sie können nach unterschiedlichen Gesichtspunkten ausgestaltet werden, z. B. als die unten erläuterten energieoptimierten Konturen, bei denen die Rückwirkungskraft [bei Reibungsfreiheit] zu Null wird.

Es kann gewünscht sein, eine nichtlineare Charakteristik der Bremsenzuspannung zu realisieren, wie sie z. B. bei konventionellen Motorwagen-Bremsventilen realisiert ist; dort steigt der ausgesteuerte, Druck progressiv mit dem Verstellweg an.

Durch geeignete Wahl des Verhältnisses des Abstandes c (119) zum Maximalwert $b_{max}$ des Verstellweges b (120) läßt sich eine gewünschte nichtlineare Abhängigkeit der Bremskraft vom Verstellweg erreichen. Vernachlässigt man in der Formel [5] den Einfluß des Winkels $\varphi$ [Beschränkung auf kleine Auslenkungen], so ergibt sich die auf das Abstandsverhältnis $b_{max}/c_2$ normierte Kraftübersetzung zu:

$$i / (b_{max} / c_2) = \frac{1 - (b_{max} / c)}{1 - (b_{max} / c) \cdot (b / b_{max})} \cdot (b / b_{max}) \qquad [6]$$

Es sei ergänzt, daß für die Betrachtung nach Formel [6] in Formel [5] die Größe $c_1$ gleich $c - b_{max}$ gewählt ist [bei maximalem Verstellweg $b=b_{max}$ geht dann die Wirkungslinie der Kraft $F_1$ (113) durch die Gelenkpunkte (111) und (110) des zweiten (102) bzw. ersten Hebels (101) mit der verschieblichen Stütze (103)], was natürlich nicht zwingend ist.

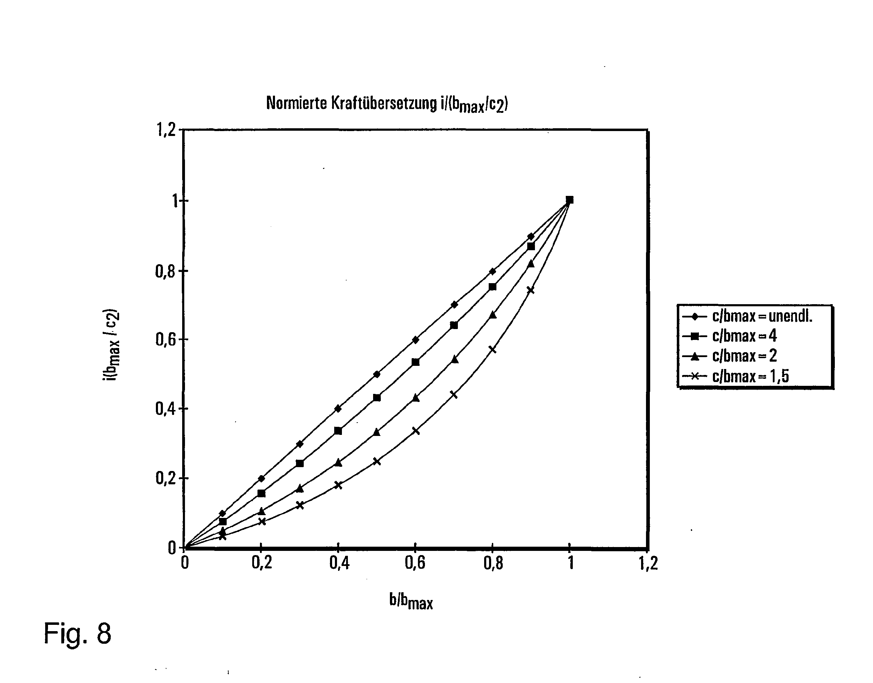

In Fig. 8 ist diese Abhängigkeit dargestellt. Auf der Abszisse ist der normierte Verstellweg $b/b_{max}$ und auf der Ordinate die normierte Kraftverstärkung $i/(b_{max}/c_2)$ aufgetragen. Man erkennt, daß der Verlauf der normierten Kraftübersetzung von dem Parameter $c/b_{max}$ [dem Quotienten von dem Abstand zwischen den gehäusefesten Drehpunkten der Hebel (101) und (102) zu dem maximalen Verstellweg] abhängt. Bei einem Verhältnis von $c/b_{max}$, das über alle Grenzen wächst [eine Realisierung dieses Verhältnisses wird nachstehend erläutert], ergibt sich ein linearer Verlauf, während z. B. bei einem Verhältnis von $c/b_{max} = 1,5$ eine starke Progressivität gegeben ist, wie sie etwa bei den genannten Motorwagen-Bremsventilen üblich ist.

Eine gewünschte nichtlineare Zuspann-Charakteristik läßt sich also durch die Wahl des auf den maximalen Verstellweg bezogenen Abstandes der Drehpunkte des ersten (101) und des zweiten (102) Hebels realisieren.

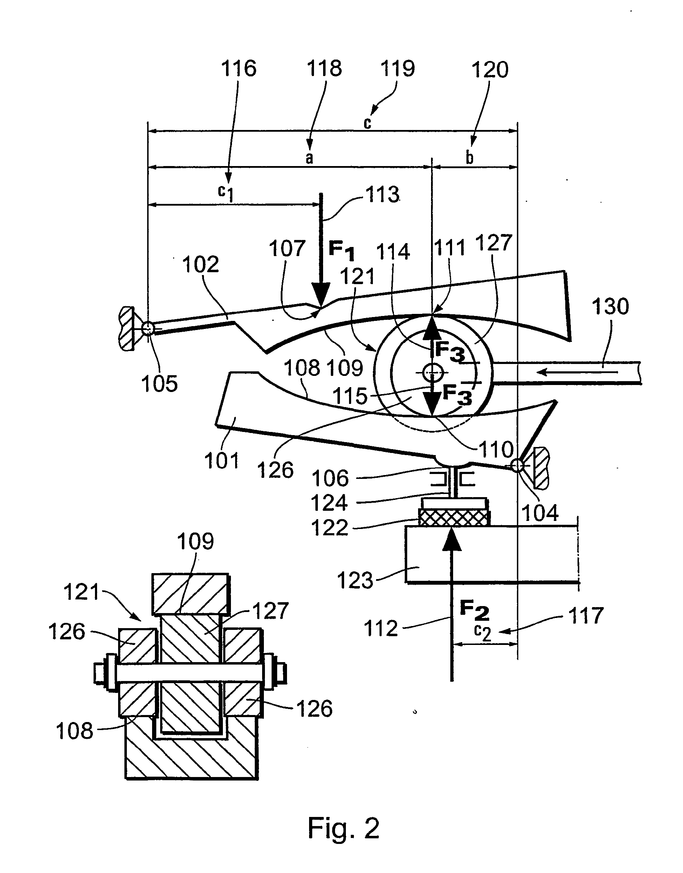

In der Zuspanneinrichtung nach Fig. 2 ist die verschiebliche Stütze (103) nach Fig. 1 als verschiebliche Rollenanordnung (121) ausgeführt, wofür mindestens eine Rolle erforderlich ist; im Ausführungsbeispiel besteht die Rollenanordnung aus einer paarweise ausgeführten ersten Rolle (126), welche sich rollend längs der Kontur (108) bewegen kann und einer zweiten Rolle (127), die auf der Kontur (109) abrollen kann. Der erste Gelenkpunkt (110) wird durch den Berührungspunkt der ersten Rolle (126) mit dem ersten Hebel (101), und der Gelenkpunkt (111) wird durch den Berührungspunkt der zweiten Rolle (127) mit dem zweiten Hebel (102) gebildet.

Der Übersicht halber ist die am Gelenkpunkt (106) wirkende Reaktioriskraft $F_2$ (112) längs ihrer Wirkungslinie verschoben an ihrem Entstehungsort, nämlich dem Flächenmittelpunkt der Berührflächen zwischen dem Bremsbelag (122) und der Bremsscheibe (123), eingezeichnet.

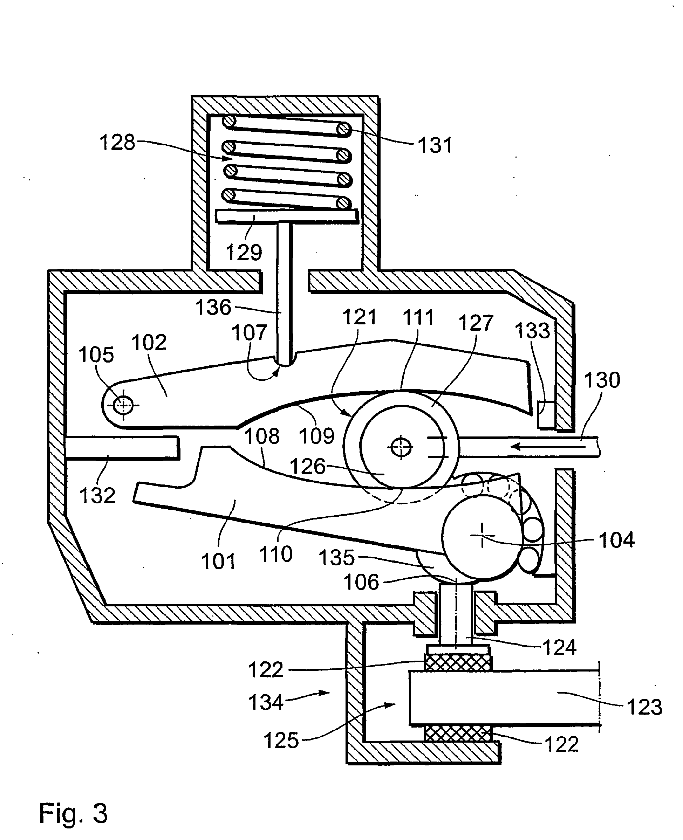

Fig. 3 zeigt eine konstruktive Ausgestaltung einer Zuspanneinrichtung nach Fig. 2.

Der erste Hebel (101) ist an seinem Drehpunkt (104) über ein nicht näher bezeichnetes Wälzlager ortsfest am Gehäuse gelagert, und der Gelenkpunkt (106) wird durch den sich auf dem Druckstück (124) abstützenden Nocken (135) gebildet.

Die Brems-Betätigung erfolgt über den ersten Hebel (101); dieser ist über den Gelenkpunkt (106) kraftschlüssig mit dem Kraftaufnahmesystem verbunden. Es ist gezeigt, wie die Bremse (125) mit den Bremsbelägen (122) und der Bremsscheibe (123) in den Bremssattel (134) integriert ist und wie die Brems-Betätigung über das Druckstück (124) erfolgt.

Im ersten Hebel (101) und im Druckstück (124) kann in vorteilhafter Weise die an sich bekannte Verschleißnachstellung für die Bremsbeläge integriert sein.

Der Krafterzeuger (128) ist ortsfest am Gehäuse angeordnet und besteht aus einem Federteller (129), einer Druckstange (136) und einer vorgespannten Druckfeder (131) zur Erzeugung der Kraft $F_1$ (113) nach Fig. 2. Die Kraftbeaufschlagung des zweiten Hebels (102) über die Druckstange (36) erfolgt am Gelenkpunkt (107).

Die Verstellung der Bremse wird über die Stellstange (130) vorgenommen Über eine nicht dargestellte Verstelleinrichtung wird die Rollenanordnung (121) verschoben und es werden, wie oben erläutert, die Gelenkpunkte (110) und (111) rollend längs der Kontur (108) bzw. (109) verschoben. Auf diese Weise wird die in Form eines variablen Getriebes aufgebaute Dosiereinrichtung verstellt, wodurch die Kraft des Krafterzeugers (128) in Abhängigkeit vom Ort der Rollenanordnung (121) dosiert und dem als Bremse (125) ausgebildeten Kraftaufnahmesystem eingeprägt wird.

Der Anschlag (133) dient zur Begrenzung des Verstellbereichs der Bremse, nämlich des Bereichs, innerhalb dessen sich die Rollenanordnung (121) bewegen kann. Für den Fall der unbetätigten Bremse nimmt die Rollenanordnung (121) die durch den Anschlag (133) vorgegebene Position ein: Auf den ersten Hebel (101) wird ein rechtsdrehendes Moment ausgeübt, wodurch die Lüftstellung eingenommen wird.

Der Anschlag (132) dient zur Begrenzung für den Schwenkbereich des ersten Hebels (101) in der Vollbremsstellung [alternativ kann auch ein gleichwirkender Anschlag zur Begrenzung des Schwenkbereichs für den zweiten Hebel (102) vorgesehen sein]. Ein derartiger Anschlag kann auch so ausgeformt sein, daß er gleichzeitig als Begrenzung des Verstellbereiches der Rollenanordnung (121) für die Vollbremsstellung dient.

Bei einer derartigen Ausformung besteht eine vorteilhafte Ausgestaltung der Erfindung darin, im Bereich des Anschlags (132) eine lösbare Arretiereinrichtung, z. B. in Form einer lösbaren Klinke, vorzusehen; sie ermöglicht es, die Bremse in der Vollbremsposition zu arretieren, und so mit geringem Kostenaufwand die Funktion der Feststellbremse zu realisieren. Allgemein ist eine solche Arretiereinrichtung an einer Stelle anzubringen, die einer hinreichend großen Bremsen-Zuspannung entspricht.

Es ist bereits vorstehend erläutert worden, daß die mechanischen Glieder (101), (102) und (103) mit ihren gelenkigen Verbindungen einen Mechanismus bilden und daß mit der weiteren Festlegung eines Antriebs und eines Abtriebs ein Getriebe definiert ist, welches zur Kraft-Dosierung vorgesehen ist.

Der Antrieb erfolgt über die Druckstange (136) am hebelfesten Gelenkpunkt (107) des zweiten Hebels (102), und der Abtrieb erfolgt über den Gelenkpunkt (106) am Nocken (135) des ersten Hebels (101).

Wie erläutert, wirkt die Kraft des Krafterzeugers (128) auf das variable Getriebe mit den mechanischen Gliedern (101), (102) und (103) ein, welches in Abhängigkeit des durch die Verstelleinrichtung bestimmten Ortes der Rollenanordnung (121) diese Kraft dosiert [Veränderung der Kraftübersetzung von z. B. 0 bis 16] und die so dosierte Kraft als Betätigungskraft am Gelenkpunkt (16) auf das als Bremse (125) ausgebildete Kraftaufnahmesystem überträgt.

Der Betätigungshub für die Bremse (125) ergibt sich aufgrund der Betätigungskraft am Gelenkpunkt (106) und der Elastizität des Kraftaufnahmesystems, wobei diese Elastizität in erster Linie durch die Elastizität des Bremsbelages (123) und die Elastizität des Bremssattels (134) bestimmt wird.

Das Kraftaufnahmesystem entwickelt so eine sich hubabhängig verändernde Reaktionskraft, die aufgrund der elastischen Verformung von Bremsbelag (123) und Bremssattel (134) mit der am Gelenkpunkt (106) einwirkenden Betätigungskraft im wesentlichen linear ansteigt bzw. abnimmt.

Ein Arbeitspunkt der Zuspanneinrichtung ist durch einen bestimmten Ort der Rollenanordnung (121) gegeben. Bei diesem Arbeitspunkt ist im Krafterzeuger (128) eine bestimmte Energie gespeichert, die sich aufgrund der Auslenkung der Feder (131) ergibt, und im Kraftaufnahmesystem ist eine bestimmte Energie gespeichert, die durch die erläuterte elastische Verformung des Kraftaufnahmesystems durch den Betätigungshub bestimmt ist.

Die wechselseitige Energieübertragung zwischen dem Krafterzeuger (128) einerseits und dem Kraftaufnahmesystem andererseits wird durch die beiden jeweils hebelfesten Konturen (18) und (109) bestimmt, zwischen denen sich die Rollenanordnung (121) bewegt; diese Konturen können als energieoptimierte Konturen ausgestaltet sein.

Die Ausgestaltung der energieoptimierten Konturen erfolgt nach der Forderung, daß in jedem Arbeitspunkt die Summe aus der Energie im Krafterzeuger und der Energie im Kraftaufnahmesystem, welche die Gesamtenergie darstellt, eine konstante Größe ist. Bei Erfüllung dieser Forderung wird beim Übergang von einem Arbeitspunkt zu einem anderen Arbeitspunkt in Zuspannrichtung genau der Energieanteil, der vom Krafterzeuger abgegeben wird, auch vom Kraftaufnahmesystem übernommen; umgekehrt wird auch beim Übergang von einem Arbeitspunkt zu einem anderen in Löserichtung genau der vom Kraftaufnahmesystem abgegebene Energieanteil vom Krafterzeuger übernommen.

Sowohl in Zuspann- als auch in Löserichtung muß also beim Übergang von einem zu einem anderen Arbeitspunkt die wechselseitige Übertragung der Energieanteile verlustfrei erfolgen.

Der grundsätzliche Rechenvorgang zur Bestimmung der energieoptimierten Kontur wird anhand der Fig. 7 erläutert, wobei Zwischenschritte der Berechnung bewußt weggelassen sind, da sie von jedem Fachmann nachvollzogen werden können.

In Fig. 7 sind der am gehäusefesten Drehpunkt (105) gelagerte zweite Hebel (102) und der am gehäusefesten Drehpunkt (104) gelagerte erste Hebel (101), der mit dem zweiten Hebel (102) über die verschiebliche Stütze (103) kraftschlüssig verbunden ist, in einer Zuspannsituation gezeigt, die dadurch bestimmt ist, daß der Gelenkpunkt (110) der verschieblichen Stütze (103) [es wird eine gleitende Verschiebung entsprechend Fig. 1 angenommen] durch die Abszisse x (150) und die Ordinate y (151) in einem bezüglich des ersten Hebels (101) hebelfesten Koordinatensystem x, y (152) festgelegt ist.

Das an und für sich beliebige Koordinatensystem x, y (152) ist hier derart definiert, daß sein Nullpunkt in den Drehpunkt (104) gelegt ist und die Abszisse x mit der unten beschriebenen Nullage (154) des ersten Hebels (101) den Winkel β (168) bildet.

In analoger Weise ist der Gelenkpunkt (111) durch die Abszisse u (160) und die Ordinate v (161) in einem bezüglich des zweiten Hebels (102) hebelfesten Koordinatensystem u, v (162) festgelegt, wobei der Nullpunkt dieses Koordinatensystems im Drehpunkt (105) liegt, und die Abszisse u mit der unten beschriebenen Nullage (153) des zweiten Hebels (102) den Winkel φ (169) bildet.

Die Berechnung wird bezüglich einer Nullage der mechanischen Glieder, nämlich bezüglich ihrer Lage bei Bremsbeginn, durchgeführt. Bei Bremsbeginn ist der Lüftweg durchlaufen und die Bremsbeläge sind gerade an die Bremsscheibe angelegt, so daß noch kein Bremsmoment wirksam ist.

Zur Erläuterung der Nullage ist der zweite Hebel (102) in Fig. 7 in dieser Lage unter dem Bezugszeichen (153) gestrichelt und der erste Hebel (101) in dieser Lage, ebenfalls gestrichelt, unter dem Bezugszeichen (154) angedeutet; die verschiebliche Stütze (103) in dieser Lage ist gestrichelt unter dem Bezugszeichen (163) angedeutet.

Die Nullage wird hier orthogonal zu den Richtungen der Kräfte $F_1$ (111) und $F_2$ (112) angenommen, was nicht zwingend ist, jedoch die Berechnungen vereinfacht.

Aufgrund der Federraten $R_1$ des Krafterzeugers und $R_2$ des Kraftaufnahmesystems ergibt sich für die Kräfte $F_1$ (113) des Kraftspeichers und $F_2$ (112) des Kraftaufnahmesystems und die zugehörigen Wege $s_1$ (155) des Gelenkpunktes (107) [Weg des Krafterzeugers] und $s_2$ (156) des Gelenkpunktes (106) [Weg des Kraftaufnahmesystems] bei Annahme linear-elastischen Verhaltens

$$F_1 = F_{1\,max} - R_1 \cdot s_1 \qquad\qquad [10]$$

$$F_2 = R_2 \cdot s_2 \qquad\qquad [11]$$

Die Größe $F_{1max}$ ist dabei die Kraft des Kraftspeichers bei der beschriebenen Nullage.

Daraus bestimmen sich die Energien $E_1$ (bei Zuspannung vom Krafterzeuger abgegeben) und $E_2$ (bei Zuspannung vom Kraftaufnahmesystem aufgenommen)

$$E_1 = (F_{1\,max} - R_1 \cdot s_1/2) \cdot s_1 \qquad\qquad [12]$$

$$E_2 = F_2 \cdot s_2/2 \qquad\qquad [13]$$

Mit der Kraftübersetzung $F_2/F_1$ , entsprechend Gleichung [5] des variablen Getriebes, ergibt sich unter Hinzuziehung der Formeln [10] und [11] ein erster Zusammenhang für die Wege $s_1$ (155) und $s_2$ (156)

$$s_2 = \frac{F_{1\,max} - R_1 \cdot s_1}{R_2} \cdot i \qquad\qquad [15]$$

Ein zweiter Zusammenhang für die Wege $s_1$ (155) und $s_2$ (156) ergibt sich aus der Forderung, daß die vom Krafterzeuger abgegebene Energie gleich der Energie ist, die vom Kraftaufnahmesystem aufgenommen wird:

$$(F_{1\,max} - R_1 \cdot s_1/2) \cdot s_1 = F_2 \cdot s_2/2 = R_2 \cdot s_2^{\,2}/2 \qquad\qquad [16]$$

Aus dem vorstehenden ersten [15] und dem vorstehenden zweiten [16] Zusammenhang ergeben sich die Wege $s_2$ und $s_1$, die jeweils eine Funktion der Kraftübersetzung i als Parameter darstellen:

$$s_2 = \frac{F_{1\,max}}{R_2} \cdot i \cdot \frac{1}{\sqrt{1 + \dfrac{R_1}{R_2} \cdot i^2}} = f(i) \qquad\qquad [17]$$

$$s_1 = \frac{F_{1\,max}}{R_2} \cdot i^2 \cdot \frac{1}{\sqrt{1 + \dfrac{R_1}{R_2} \cdot i^2}} \cdot \frac{1}{1 + \sqrt{1 + \dfrac{R_1}{R_2} \cdot i^2}} = f(i) \qquad\qquad [18]$$

Für den Drehwinkel $\varphi$ (169) des zweiten Hebels (102) ergibt sich unter Berücksichtigung des am Hebel gemessenen Abstandes $c_{10}$

$$\sin \varphi = \frac{s_1}{c_{10}} = f(i) \qquad\qquad [19]$$

Für den Drehwinkel $\beta$ (168) des ersten Hebels (101) ergibt sich für Kreisevolventennocken

$$\beta = \frac{s_2}{c_{10}} = f(i) \qquad\qquad\qquad [20]$$

Für den weiteren Gang der Berechnungen wird der Weg $s_3$ (157) eingeführt; dieser stellt den Weg der Gelenkpunkte (111) und (110) bei bestimmten Wegen $s_1$ (155) und $s_2$ (156) dar.
Die Abszisse x (150) des Gelenkpunktes (110) ergibt sich nach Fig. 7 durch Summierung von entsprechenden Streckenabschnitten zu der von der Kraftübersetzung i als Parameter abhängigen Größe:

$$x = b \cdot \cos\beta + s_3 \cdot \sin\beta = f(i) \qquad\qquad\qquad [22]$$

Die Ordinate y (151) des Gelenkpunktes (110) ergibt sich entsprechend Fig. 7 als Differenz entsprechender Streckenabschnitte zu der von der Kraftübersetzung i als Parameter abhängigen Größe:

$$y = b \cdot \sin\beta - s_3 \cdot \cos\beta = f(i) \qquad\qquad\qquad [23]$$

Aus der jeweiligen Kraftübersetzung i ist dabei das folgende Verhältnis zu bestimmen

$$\frac{b}{c-b} = \frac{c_2}{c_{10}} \cdot \frac{i}{\cos\varphi} \qquad\qquad , \qquad [24]$$

aus dem sich dann der zugehörige Verstellweg b ergibt

$$b = c \cdot \frac{\dfrac{b}{c-b}}{1 + \dfrac{b}{c-b}} \qquad\qquad\qquad . \qquad [25]$$

In analoger Weise ergibt sich für die Koordinaten u, v des Gelenkpunktes (111) nach Fig. 7 durch Summierung bzw. Differenzbildung

$$u = s_3 \cdot \sin\varphi + (c-b) \cdot \cos\varphi = f(i) \qquad\qquad [26]$$

$$v = s_3 \cdot \cos\varphi - (c-b) \cdot \sin\varphi = f(i) \qquad\qquad [27]$$

Hierbei sind entsprechend der jeweiligen Kraftübersetzung i einzusetzen.

$$c - b = \frac{c}{1 + \dfrac{b}{c-b}} \qquad\qquad\qquad . \qquad [28]$$

Sowohl in den Gleichungen [22], [23] als auch in den Gleichungen [26] und [27] ist noch der oben eingeführte, aber bisher unbestimmte Weg $s_3$ (157) enthalten; in anderen Worten ist es derjenige Weg, den die Stütze (103) bei ihrer Verschiebung aus der Nullage in Richtung der Wirkungslinie der Kraft $F_3$ zurückgelegt hat.

Der Weg $s_3$ ergibt sich für die energieoptimierten Konturen aus der Bedingung, daß die von der Kraft $F_3$ bei der Verschiebung längs des Weges $s_3$ vom Hebel (102) übernommene Arbeit $E_3$ gleich der vom Krafterzeuger abgegebenen Energie $E_1$ ist, was sich natürlich direkt aus den vorstehenden Erläuterungen bezüglich des Überganges von einem Arbeitspunkt zu einem anderen ergibt. Die Arbeit $E_3$ wird vom Hebel (101) übernommen und an das Kraftaufnahmesystem weitergeleitet und ist somit gleist der von diesem aufgenommenen Energie $E_2$ [$E_3=E_1=E_2$].

Es gilt also

$$E_3 = \int_0^{s_3} F_3 \cdot ds_3 = E_1 = E_2 \qquad , \qquad [29]$$

woraus folgt

$$dE_3 = F_3 \cdot ds_3 = dE_2 = F_2 \cdot ds_2 \qquad , \qquad [30]$$

und sich der Weg $s_2$ mit $\dfrac{F_2}{F_3} = \dfrac{b}{c_2}$ durch das folgende Integral bestimmt

$$s_3 = \int_0^{s_2} \frac{b}{c_2} \cdot ds_2 = \int_0^i \frac{b}{c_2} \cdot s_2' \cdot di \qquad . \qquad [31]$$

Die in Gleichung [31] angegebene Größe $s_2'$ stellt die Ableitung des Weges $s_2$ aus Gleichung [17] nach dem Parameter i dar [der Verstellweg b als Funktion des Parameters i ergibt sich dabei aus Formel [25]]:

$$s_2' = \frac{ds_2}{di} = \frac{F_{1max}}{R_2} \cdot \frac{1}{\left( \sqrt{1 + \dfrac{R_1}{R_2} \cdot i^2} \right)^3} \qquad . \qquad , \qquad [32]$$

Das Integral nach Gleichung [31] ist gegebenenfalls für den jeweils gewünschten Wert des Parameters i numerisch zu lösen.

Die Größen x (150) und y (151) liegen entsprechend Formel [22] bzw. [23] in Parameterform, abhängig vom Parameter i vor. Für einen bestimmten Parameter i der Kraftverstärkung werden die Wege $s_1$, $s_2$ und $s_3$ nach den Gleichungen [17], [18], [31] und die Winkel $\varphi$ und $\beta$ nach den Gleichungen [19], [20] berechnet, und diese Wege und diese Winkel ergeben zusammen mit dem Verstellweg b(i) entsprechend den Formeln [24], [25] den zu dieser Kraftübersetzung gehörenden Abszissenwert x nach Formel [22] und nach Formel [23] den zu dieser Kraftübersetzung gehörenden Ordinatenwert y.

Mit den für den bestimmten Parameter i berechneten Werten $s_1$, $s_2$, $s_3$, $\varphi$, $\beta$ lassen sich unter Hinzuziehung von Gleichung [28] für die Größe c - b in analoger Weise die Koordinaten u, v nach den Gleichungen [26] bzw. [27] bestimmen.

Zur Bestimmung der Steigung der Funktion y(x) der Kontur (108) wird die Ableitung von y nach x gebildet, die sich aus der Ableitung von y und x nach dem Parameter i ergibt.

$$\frac{dy}{dx} = \frac{dy / di}{dx / di} \qquad\qquad [33]$$

Die Ausführung dieser Berechnungen führt zu den Gleichungen

$$dy / di = b \cdot \left(\sin\beta\right)' + b' \cdot \sin\beta - s_3 \cdot \left(\cos\beta\right)' - s_3' \cdot \cos\beta \qquad\qquad [34]$$

$$dx / di = b \cdot \left(\cos\beta\right)' + b' \cdot \cos\beta + s_3 \cdot \left(\sin\beta\right)' + s_3' \cdot \sin\beta \qquad . \qquad [35]$$

Die mit dem Hochkomma gekennzeichneten Größen in den Gleichungen [34, 35] stellen die Ableitungen dieser Größen nach dem Parameter i dar.
Die Division der Ableitung dy/di nach Gleichung [34] durch die Ableitung dx / di nach Gleichung [35] ergibt

$$\frac{dy}{dx} = \tan\beta \qquad\qquad . \qquad [36]$$

Die Steigung der Tangente an die Kontur y(x) (108) im jeweiligen Abstützpunkt ist also gleich dem Tangens des zugehörigen Drehwinkels β des ersten Hebels (101). Damit ist die Tangente im Abstützpunkt orthogonal zur Richtung der Stützkraft, die dadurch [abgesehen von der Reibungskraft] keine Komponente in Verschiebungsrichtung des Abstützpunktes (110) der verschieblichen Stütze (13) hat.
Bei analoger Betrachtung der Funktion v(u) der Kontur (109) ergibt sich aus den Ableitungen von v und u nach dem Parameter i

$$\frac{dv}{du} = \frac{v'}{u'} = -\tan\varphi \qquad\qquad . \qquad [37]$$

Die Steigung der Tangente an die Kontur v(u) (109) im jeweiligen Abstützpunkt ist also gleich dem negativen Tangens des zugehörigen Drehwinkels φ des Hebels. Beim gewählten Koordinatensystem ist damit die Tangente im Abstützpunkt ebenfalls orthogonal zur Richtung der Stützkraft.
Die die energieoptimierte Kontur y(x) (108) beschreibenden Gleichungen [22] und [23] stellen eine Möglichkeit für die Realisierung der hebelfesten Kontur y(x) (108) nach Fig. 1 bis 3 dar. Weitere Möglichkeiten sind durch Äquidistanten zur Kontur y(x) gegeben; alle Äquidistanten zu der durch die letztgenannten Gleichungen beschriebenen Kontur sind nämlich ebenfalls orthogonal zur Richtung der Stützkraft und damit gleichwertig zur Abstützung [als hebelfeste Kontur] geeignet.
Eine Äquidistante (166) im Abstand $q_2$ (164) ist durch die Gleichungen [28] und [29] in Parameterform beschrieben:

$$x = b \cdot \cos\beta + \left(s_3 + q_2\right) \cdot \sin\beta = f(i) \qquad\qquad [38]$$

$$y = b \cdot \sin\beta - (s_3 + q_2) \cdot \cos\beta = f(i) \qquad\qquad [39]$$

Die in Fig. 7 beispielhaft dargestellte Äquidistante (166) hat gegenüber einer Kontur nach den Gleichungen [22] und [23] um $q_2$ (164) vergrößerte Krümmungsradien. Dadurch werden entsprechend vergrößerte Stützrollen ermöglicht.

Wegen der erwähnten Gleichwertigkeit muß nicht zwischen einer Kontur nach den Gleichungen [22] und [23] und Äquidistanten nach den Gleichungen [38] und [39] unterschieden werden.

In sinngemäß gleicher Weise können Äquidistanten zur energieoptimierten Kontur v(u) (109) angegeben werden, für die die zur Äquidistanten für die Kontur y(x) (108) getroffenen Annahmen ebenfalls sinngemäß gelten. Eine Äquidistante (167) im Abstand $q_1$ (165) ist durch die folgende Gleichungen in Parameterform beschrieben:

$$u = (s_3 - q_1) \cdot \sin\varphi + (c - b) \cdot \cos\varphi = f(i) \qquad\qquad [40]$$

$$v = (s_3 - q_1) \cdot \cos\varphi - (c - b) \cdot \sin\varphi = f(i) \qquad\qquad . \qquad [41]$$

Es besteht die Möglichkeit, im Verstellbereich zwischen der den Bremsbeginn bestimmenden Nullage und der Lüftstellung mindestens eine der beiden Konturen (108) und (109) derart zu verändern, daß während des Übergangs von der Nullage zur Lüftstellung oder umgekehrt keine Energie aus dem Krafterzeuger übernommen wird; die Konturen sind dabei so zu modifizieren, daß am zweiten Hebel (102) bei diesen Übergängen keine Drehung erfolgt [d. h. mindestens eine der beiden Konturen ist derart zu gestalten, daß dieses Ziel erreicht wird]. Dreht sich der Hebel (102) nicht bzw. bleibt das unten erläuterte Hebelelement (140) unbewegt, so bleibt die Energie im Krafterzeuger unverändert.

Soll eine Zuspanneinrichtung mit selbstlösender oder selbstzuspannender Charakteristik realisiert werden, so muß man von der erläuterten Orthogonalität der energieoptimierten Konturen abgehen. Die Wirkungslinie der am Gelenkpunkt (111) von der Kontur (109) auf die Rolle (127) ausgeübten und durch den Rollenmittelpunkt gehenden Kraft $F_3$ (114) bildet mit der Wirkungslinie der am Gelenkpunkt (110) der Rolle (126) auf die Kontur (108) wirkende und enfalls durch den Rollenmittelpunkt gehenden Kraft $F_3$ (115) im Falle der energieoptimierten Kontur stets einen Winkel $\delta = 0$. Im Falle einer selbstlösenden bzw. selbstzuspannenden Kontur bilden die Wirkungslinien dieser beiden Kräfte einen als Gefällewinkel wirkenden spitzen Winkel $\delta > 0$. Dieser Winkel $\delta$ tritt als spitzer Winkel auch auf zwischen der Tangente an die Kontur (109) im Gelenkpunkt (111) und der Tangente an die Kontur (108) im Gelenkpunkt (110). Die Rolle bewirkt bei Abwesenheit einer durch die Stellstange (130) in den Rollenmittelpunkt eingeleiteten und das statische Gleichgewicht herstellenden Haltekraft einen die Reibung überwindenden Selbstlauf in die Richtung, die der vom Rollenmittelpunkt zum Schnittpunkt dieser beiden Tangenten weisenden Richtung entgegengesetzt ist. Beim Ansatz der Berechnung der Reibungswirkung zur Festlegung des Winkels $\delta$ sind alle beteiligten Reibanteile, wie z. B. die Reibungen zwischen Rolle und Kontur und zwischen Rolle und einem rollenführenden Bolzen, zu berücksichtigen.

Eine selbstlösende Kontur ist so ausgestaltet, daß der Tangentenschnittpunkt auf der der Nullage entgegengesetzten Seite der Rollenanordnung (121) liegt. So erzeugt der Gefällewinkel $\delta$ an den Gelenkpunkten (110) und (111) eine Rückstellkraft auf die Rollenanordnung (121) in Richtung der Nullage in der Nähe des Anschlags (133).

Über die Stellstange (130) muß daher eine bestimmte Kraft auf die Rollenanordnung (121) ausgeübt werden, um die Zuspanneinrichtung an einem gewünschten Bremsenhub zu halten; übt man keine "Haltekraft" aus und überläßt die Zuspanneinrichtung sich selbst, so wird automatisch die Nullage und weiter die Lüftstellung eingenommen.

Durch die erläuterte Kraft-Komponente in Löserichtung ist eine selbstlösende Kontur nicht mehr energieoptimiert. Bei einer von der Nullage ausgehenden Verstellung der Rollenanordnung (121) in Zuspannrichtung muß entsprechend dem durch den Winkel $\delta$ beschriebenen Gefälle, gegenüber dem in Gegenrichtung die Verstellung erfolgt, von der Verstelleinrichtung eine bestimmte Zustellarbeit geleistet werden, die bei der Rückkehr in die Nullage nicht mehr zurückgewonnen wird. Die Verstellarbeit vergrößert sich natürlich mit der Wahl größerer Gefällewinkel $\delta$; wie oben erläutert, ist $\delta$ durch die Reibung bestimmt. Der Gefällewinkel $\delta$ ist an sich keine Konstante, da er sich aufgrund der örtlichen stellungsabhängigen Kräfte und damit der jeweiligen Reibkräfte ergibt. Er kann aber vorzugsweise in Berechnungen nicht energieoptimierter zum Selbstlauf heranzuziehender Konturen als $\delta_{max}$ konstant gesetzt werden, sofern $\delta_{max}$ nur größer ist als der größte der punktweise längs der Konturen bestimmbaren Gefällewinkel.

Um diese Zustellarbeit möglichst gering zu halten, ist es sinnvoll, von den energieoptimierten Konturen auszugehen und diese derart zu modifizieren, daß sich an jedem Punkt der Konturen der erforderliche Gefällewinkel δ einstellt. Auf diese Weise wird erreicht, daß die nun erforderliche Zustellarbeit nur um das wirklich notwendige Maß gegenüber der im Falle der energieoptimierten Konturen allein der Reibung wegen erforderlichen Stellarbeit vergrößert wird.

Die vorstehenden Erläuterungen zu selbstlösenden Konturen gelten in sinngemäß analoger Weise auch für selbstzuspannende Konturen; diese sind so ausgestaltet, daß der Tangentenschnittpunkt auf der der Nullage zugewandten Seite der Rollenanordnung (21) liegt. Der Gefällewinkel δ bewirkt, daß über die Gelenkpunkte (110) und (111) auf die Rollenanordnung (121) eine Zustellkraft in Richtung der Vollbremsstellung erzeugt wird. Überläßt man eine Zuspanneinrichtung mit derartigen Konturen sich selbst, so wird automatisch die Vollbremsstellung eingenommen [Sicherheitsbremse].

Bei der selbstzuspannenden Kontur muß die Zuspanneinrichtung ausgehend von der Vollbremsstellung bis zur Nullage Lösearbeit leisten, die nicht mehr zurückgewonnen werden kann.

Die selbstlösenden [selbstzuspannenden] Konturen können vereinfacht dadurch erzeugt werden, daß die hebelfesten energieoptimierten Konturen in den hebelfesten Koordinatensystemen in dem der Maximalübersetzung [Minimalübersetzung] entsprechenden Berechnungsanfangspunkten um den Winkel $\delta_{max}$ in geeigneter Weise verdreht werden.

Wie vorstehend erläutert, kann eine Zuspanneinrichtung mit selbstlösender Charakteristik unter Verwendung selbstlösender Konturen und eine Zuspanneinrichtung mit selbstzuspannender Charakteristik unter Verwendung selbstzuspannender Konturen realisiert werden. Alternativ hierzu besteht auch die Möglichkeit, für beide Zuspanncharakteristiken die energieoptimierten Konturen vorzusehen und für das Selbstlösen bzw. Selbstzuspannen eine separate Löse-bzw. Zuspann-Einrichtung vorzusehen. Diese Löse- bzw. Zuspann-Einrichtung kann z. B. kostengünstig durch eine Feder (oder mehrere Federn) realisiert werden, die auch vorgespannt sein kann.

Bei der Realisierung einer separaten Löse- oder Zuspann-Einrichtung in Form einer Feder ist es allerdings nicht möglich, die Wirkungsgrad-Verschlechterung auf das notwendige Maß zu beschränken, indem wie bei der Konturen-Lösung unabhängig vom Bremshub ein annähernd konstanter Gefällewinkel δ gewählt wird; bei Verwendung von Federn ergibt sich durch die Federcharakteristik eine Verstellarbeit (Löse- bzw. Zustellarbeit), die immer vom Federweg abhängt.

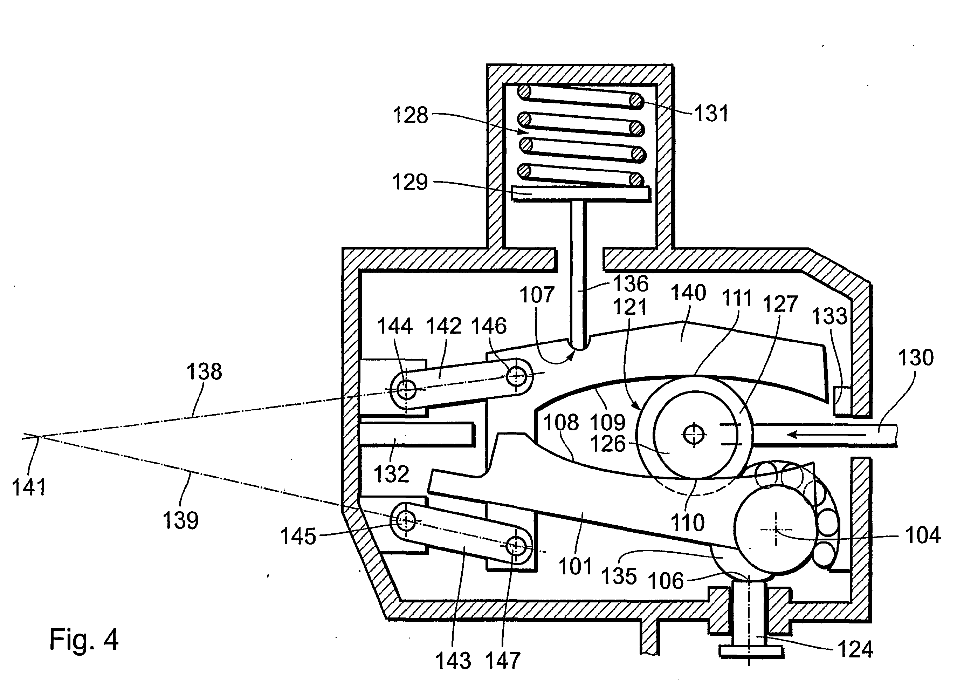

In der Ausgestaltung nach Fig. 4 ist der zweite Hebel (102) nach Fig. 3 als lenkergeführtes Element ausgebildet. Hierzu ist ein Hebelelement (140) vorgesehen, das die Funktion des zweiten Hebels (102) nach Fig. 1-3 übernimmt; bezüglich des neuen Hebelelementes (140) gelten sinngemäß alle vorher für den zweiten Hebel (102) getroffenen Aussagen, was z. B. die Aussagen bezüglich der Kraftübersetzung oder der Rückwirkungskraft betrifft.

Das Hebelelement (140) wird bei der Bremsen-Zuspannung ebenfalls im Uhrzeigersinn verschwenkt, jedoch erfolgt diese Verschwenkung nicht mehr um einen gehäusefesten Drehpunkt, sondern um einen Momentanpol (141), der die Rolle des gehäusefesten Drehpunktes (105) nach Fig. 3 übernimmt.

Zur Verschwenkung des Hebelelementes (140) sind vorgesehen:

Ein an einem gehäusefesten Drehpunkt (144) gelagerter erster Lenker (142), der mit dem Hebelelement (140) an einem ersten hebelelementfesten Drehgelenkpunkt (146) drehbar verbunden ist;

ein an einem gehäusefesten Drehpunkt (145) gelagerter zweiter Lenker (143), der mit dem Hebelelement (140) an einem zweiten hebelelementfesten Drehgelenkpunkt (147) drehbar verbunden ist.

Die Anordnung aus Gehäuse, erstem Lenker (142), Hebelelement (140) und zweitem Lenker (143) bildet ein Gelenkviereck, bei dem das Hebelelement (140) lenkergeführt bei der Bremsen-Zuspannung im Uhrzeigersinn um den Momentanpol (141) verschwenkt wird. Voraussetzung für diese Funktion ist, daß sich erstens der Momentanpol (141) außerhalb des Bereiches zwischen den Wirkungslinien der Kräfte des Krafterzeugers und des Kraftaufnahmesystems befindet, und daß zweitens der Momentanpol auf der der Verstelleinrichtung abgewandten Seite liegt.

Die genannten zwei Bedingungen sind in Fig. 4 erfüllt: Die beiden Lenker (142) und (143) stehen jeweils schräg zueinander; der Momentanpol (141) wird durch den Schnittpunkt einer ersten Verbindungslinie (138) zwischen dem gehäusefesten Drehpunkt (144) und dem ersten hebelelementfesten Drehgelenkpunkt (146) mit einer zweiten Verbindungslinie (139) zwischen dem gehäusefesten Drehpunkt (145) und dem zweiten hebelelementfesten Drehgelenkpunkt (147) gebildet. Der spitze Winkel zwischen den Verbindungslinien (138) und (139) wird durch die erläuterte gegenseitige Schrägstellung der Lenker (142) und (143) erreicht.

In der Formel [5] zur Bestimmung der Kraftübersetzung i ist u. a. die Größe c maßgebend, die bei der Ausführung nach Fig. 3 den konstanten Abstand zwischen den gehäusefesten Drehpunkten (104) und (105) darstellt. Bei der Ausführungsform nach Fig. 4 ist hierbei zu beachten, daß die Größe c, der Abstand zwischen dem Momentanpol (141) und dem gehäusefesten Drehpunkt (14) nun keine exakt konstante Größe mehr darstellt, da der Momentanpol (141) natürlich nicht mehr ortsfest ist. Für die Größe c kann jedoch mit guter Näherung ein geeigneter Wert eingesetzt werden, der z.

B. einem Mittelwert aller bei der Zuspannung vorkommenden Momentanpole entspricht.

Der Vorteil der Zuspanneinrichtung nach Fig. 4 gegenüber derjenigen nach Fig. 3 besteht darin, daß nur ein kleinerer Bauraum erforderlich ist. Die wirksame Länge der lenkergeführten Hebelanordnung nach Fig. 4 wird durch den Ort des Momentanpols bestimmt, der wie in Fig. 4 dargestellt, weit außerhalb des eigentlichen Gehäuses liegen kann. Auf diese Weise sind also große effektive Hebellängen zu realisieren; in Bezug auf Fig. 8 entspricht dies großen Werten des vorstehend erläuterten Parameters $c/b_{max}$. Derartige Anordnungen sind also vorteilhaft, wenn eine Bremsen-Zuspannung mit nur einer geringen Nichtlinearität erwünscht ist.

Je kleiner der Winkel zwischen den Verbindungslinien (138) und (139) wird, desto weiter entfernt vom Gehäuse befindet sich der Momentanpol (141). Sind die Lenker (142) und (143) als parallel zueinander liegende Lenker ausgeführt [Lenker (142), (143) gleicher Länge bilden gegenüberliegende Seiten eines Parallelogramms, bei dem der gehäusefeste Abstand zwischen den Gelenkpunkten (144) und (145) gleich dem hebelelementfesten Abstand der Drehpunkte (146), (147) ist], dann wandert der Momentanpol (141) ins Unendliche. Das Hebelelement (140) stellt dann ein geradegeführtes Element dar, welches bei der Bremsen-Zuspannung nicht mehr um eine im endlichen Bereich liegenden Pol gedreht, sondern parallel verschwenkt wird [geradegeführtes Element].

Bei einem geradegeführten Hebelelement dieser Art wächst der vorstehend erläuterte Parameter $c/b_{max}$ über alle Grenzen; beim Einsetzen in die Formel [6] ergibt sich dann für die normierte Kraftübersetzung:

$$i / (b_{max} / c_2) = \frac{b}{b_{max}} \qquad\qquad [7]$$

Die normierte Kraftübersetzung ist nun direkt proportional zum normierten Verstellweg. Die Ausführungsform einer gerade geführten Hebelanordnung eignet sich daher immer dann, wenn eine lineare Bremsen-Zuspannung erwünscht ist.

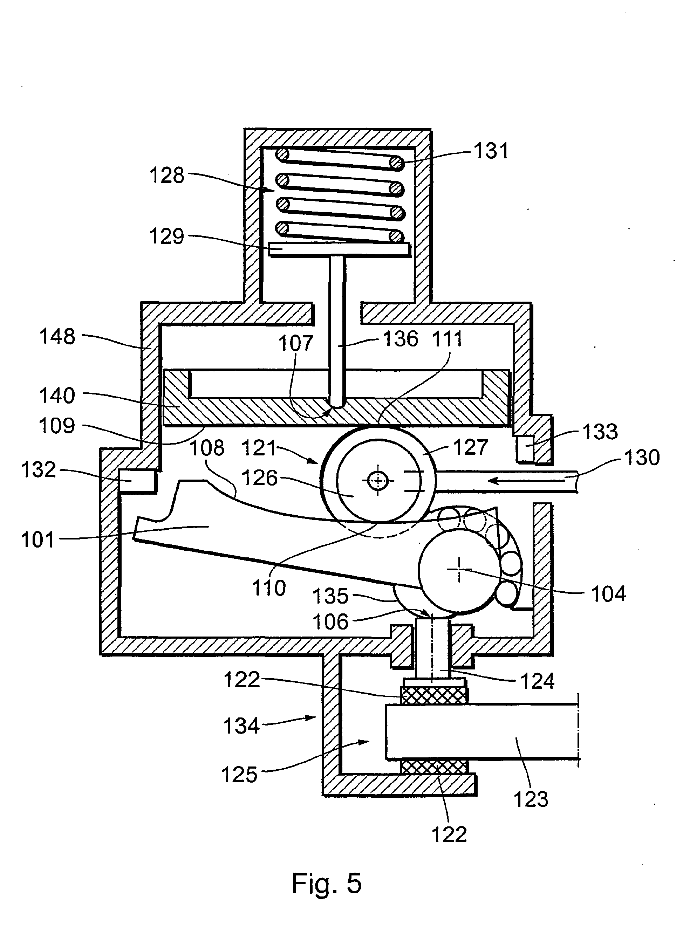

Fig. 5 zeigt eine Ausführungsform des geradegeführten Hebelelementes ohne die Verwendung von Lenkern.

Das Hebelelement (140) wird bei der Verstellung durch eine im Gehäuse angebrachte Führungsfläche (148) geradegeführt. Die Kontur (19) des Hebelelementes (140) besteht aus einer ebenen Fläche, die so ausgerichtet ist, daß sie mit der Wirkungslinie der vom Krafterzeuger eingeleiteten Kraft einen rechten Winkel bildet.

Anhand der Fig. 5 läßt sich die erläuterte Linearität eines gerade geführten Hebelelementes besonders anschaulich zeigen: Die Kraft auf die verschiebliche Rollenanordnung (121) ist gleich der am Gelenkpunkt (107) eingeleiteten Kraft des Krafterzeugers, unabhängig vom Ort der verschieblichen Rollenanordnung (121). Das Moment, das der erste Hebel (101) am Gelenkpunkt (106) auf das Kraftaufnahmesystem überträgt, ist proportional zum Verschiebeweg b.

Ein großer Vorteil dieser Ausführung besteht darin, daß zur Realisierung energieoptimierter Verhältnisse nur die Kontur y(x) (108) speziell auszubilden ist.

Die beschreibenden Gleichungen ergeben sich aus den vorstehend genannten, wenn die Abstände c (119) und damit $c_1$ (116) über alle Grenzen wachsen und weiter der Weg $s_3$ (157) gleich dem Weg $s_1$ (155) sowie der Drehwinkel $\varphi$ (169) gleich 0 gesetzt wird. Statt der Gleichungen [22] und [23] gelten dann:

$$x = b \cdot \cos\beta + s_1 \cdot \sin\beta = f(i) \qquad\qquad [42]$$

$$y = b \cdot \sin\beta - s_1 \cdot \cos\beta = f(i) \qquad\qquad , \qquad [43]$$

wobei für diesen Fall eine Proportionalität zwischen dem Verstellweg b und der Kraftübersetzung i gegeben ist.

$$b = i \cdot c_2 \qquad\qquad [44]$$

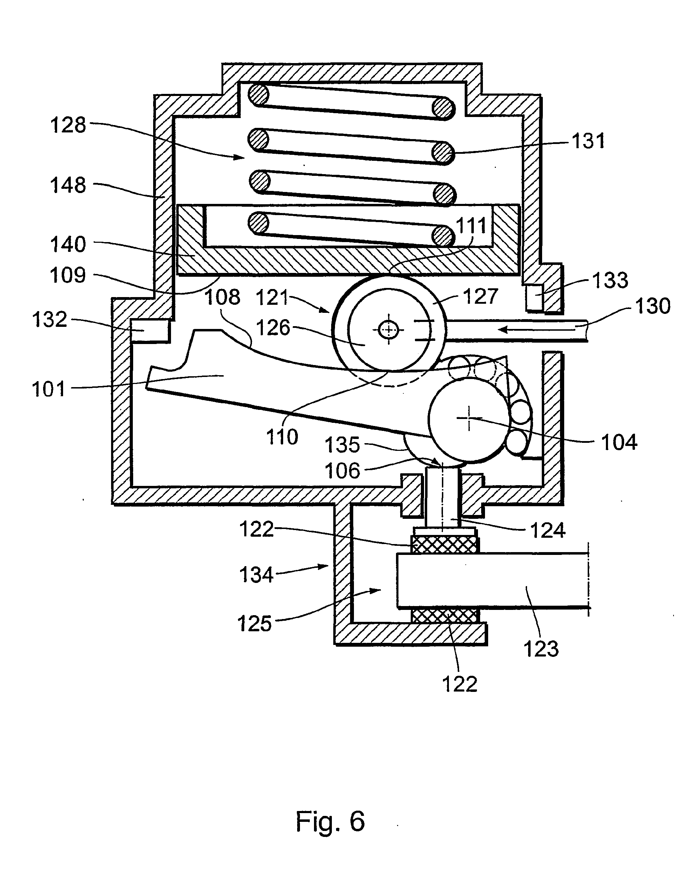

Fig. 6 zeigt eine besonders einfache Ausführung der Zuspanneinrichtung nach Fig. 5. Das Hebelelement (140) ist in den Krafterzeuger selbst integriert, es ist mit dem Federteller (129) baulich vereinigt, so daß die Druckstange (136) entfallen kann. Die Führungsfläche (148) ist ebenfalls in den Krafterzeuger selbst integriert. Bei dieser Ausführungsform ist die Anzahl der benötigten Teile erheblich reduziert, was eine kostengünstige Herstellung ermöglicht.

**Patentansprüche**

1. Zuspanneinrichtung für Radbremsen, mit folgenden Merkmalen:

    a) Es ist eine Krafterzeugungseinrichtung (128) zur Erzeugung eines Betätigungshubes für eine Radbremse (125) vorgesehen;

    b) die Krafterzeugungseinrichtung (128) wirkt auf ein Kraftaufnahmesystem (122, 124, 125, 134) ein, welches eine sich hubabhängig verändernde Reaktionskraft ($F_2$, 122) entwickelt;

    c) die Krafterzeugungseinrichtung (128) ist gegenüber der Reaktionskraft ($F_2$, 122) am Gehäuse der Zuspanneinrichtung abgestützt;

    d) die Veränderung der Reaktionskraft ($F_2$, 122) beruht auf einer elastischen Verformung und steigt im Wesentlichen linear an bzw. nimmt entsprechend linear ab;

    e) es ist eine Einrichtung (101, 102, 103, 104, 105, 121, 126, 127, 135) zur Kraft-Dosierung vorgesehen, die zwischen der Krafterzeugungseinrichtung (128) und dem Kraftaufnahmesystem (122, 124, 125, 134) angeordnet ist;

    f) es ist eine auf die Kraft-Dosiereinrichtung (101, 102, 103, 104, 105, 121, 126, 127, 135) einwirkende Verstelleinrichtung (130) zur Veränderung der auf das Kraftaufnahmesystem (122, 124, 125, 134) wirkenden Kraft vorgesehen;

    g) die Krafterzeugungseinrichtung (128) ist so ausgebildet, dass sie bei einer durch die Verstelleinrichtung (130) veranlassten Vergrößerung der auf das Kraftaufnahmesystem (122, 124, 125, 134) wirkenden Kraft einen Teil der in ihr gespeicherten Energie ($E_1$) abgeben kann;

    h) die Krafterzeugungseinrichtung (128) ist so ausgebildet, dass sie bei einer durch die Verstelleinrichtung veranlassten Verkleinerung der auf das Kraftaufnahmesystem (122, 124, 125, 134) wirkenden Kraft die von dem Kraftaufnahmesystem (122, 124, 125, 134) aufgenommene Energie ($E_2$) zumindest teilweise wieder aufnehmen kann;

    i) die Kraft-Dosiereinrichtung (101, 102, 103, 104, 105, 121, 126, 127, 135) ist als Getriebe mit variablem Übersetzungsverhältnis ausgebildet, welches die Kraftübersetzung zwischen der vom Kraftaufnahmesystem (122, 124, 125, 134) entwickelten Reaktionskraft ($F_2$, 112) und der Kraft ($F_1$, 113) der Krafterzeugungseinrichtung (128) bestimmt;

    j) im Getriebe ist eine erste Hebeleinrichtung (101) mit einem gehäusefest ausgeführten Drehgelenkpunkt (104) vorgesehen, die über einen Kraftangriffspunkt (106) mit vorgegebener Hebelarmlänge (102, 117) auf das Kraftaufnahmesystem (122, 124, 125, 134) einwirkt;

    k) im Getriebe ist ein Zwischenglied (102, 140) vorgesehen, auf welches die Krafterzeugungseinrichtung (128) an einer zwischengliedfesten Stelle (107) einwirkt;

    l) das Zwischenglied (102, 140) überträgt die von der Krafterzeugungseinrichtung (128) abgegebene Kraft auf die erste Hebeleinrichtung (101);

    m) wobei mindestens eine Hebeleinrichtung (1) auf der der jeweils anderen Hebeleinrichtung (2, 40) zugewendeten Seite über eine speziell ausgebildete hebelfeste Kontur (8, 9) verfügt und mindestens eine der hebelfesten Konturen (8, 9) als energieoptimierte Kontur ausgeführt ist, die durch ihre Ausgestaltung sicherstellt, dass in jedem Arbeitspunkt die Summe der jeweiligen Energien in der Krafterzeugungseinrichtung (28) und im Kraftaufnahmesystem (22, 24, 25, 34) konstant ist.

2. Zuspanneinrichtung nach Anspruch 1, **dadurch gekennzeichnet, dass** das Zwischenglied (2, 40) als eine zweite Hebeleinrichtung (2) mit einem gehäusefest ausgeführten Drehgelenkpunkt (5) ausgebildet ist und die Krafteinwirkung an einem Kraftangriffspunkt (7) mit vorgegebener Hebelarmlänge ($C_1$, 16) erfolgt.

3. Zuspanneinrichtung nach Anspruch 1, **dadurch gekennzeichnet, dass** das Zwischenglied (2, 40) als lenkergeführtes (42) Hebelelement (40) ausgebildet ist, und die Krafteinwirkung an einem hebelelementfesten Kraftangriffspunkt (7) erfolgt.

4. Zuspanneinrichtung nach Anspruch 3, **dadurch gekennzeichnet, dass** eine Geradführung des Hebelelementes (40) dadurch realisiert wird, dass der Momentpol (41) des lenkergeführten (42) Hebelelementes (40) ins Unendliche gelegt ist.

5. Zuspanneinrichtung nach Anspruch 1, **dadurch gekennzeichnet, dass** das Zwischenglied (2, 40) als ein durch eine gehäusefeste Geradführung (48) geführtes Hebelement (40) ausgebildet ist.

6. Zuspanneinrichtung nach Anspruch 4 oder 5, **dadurch gekennzeichnet, dass** das Hebelement (40) an seiner der ersten Hebeleinrichtung (1) zugewendeten Seite (9) über eine ebene Fläche verfügt.

7. Zuspanneinrichtung nach einem der Ansprüche 1 bis 6, **dadurch gekennzeichnet, dass** zur Kraftübertragung zwischen der ersten Hebeleinrichtung (1) und dem Zwischenglied (2, 40) eine nicht ortsfeste verschiebliche Stütze (3, 21) vorgesehen ist, wobei an dem Berührungspunkt (10) der Stütze (3, 21) mit der ersten Hebeleinrichtung (1) ein erstes und an dem Berührungspunkt (11) der Stütze (3, 21) mit dem Zwischenglied (2, 40) ein zweites Gelenk gebildet ist.

8. Zuspanneinrichtung nach Anspruch 7, **dadurch gekennzeichnet, dass** die Kraftübersetzung durch den Ort der Stütze (3, 21) relativ zum Gehäuse bestimmt ist.

9. Zuspanneinrichtung nach Anspruch 7 oder 8, **dadurch gekennzeichnet, dass** die Stütze (3, 21) als Rollenanordnung (21) mit mindestens einer Rolle (26, 27) ausgebildet ist.

10. Zuspanneinrichtung nach einem der Ansprüche 1 bis 9, **dadurch gekennzeichnet, dass** die hebelfeste (8, 9) Kontur als Äquidistante zur energieoptimierten Kontur ausgeführt ist.

11. Zuspanneinrichtung nach einem der Ansprüche 1 bis 10, **dadurch gekennzeichnet, dass** mindestens eine der hebelfesten Konturen (8, 9) derart ausgeführt ist, dass die Richtung der von der verschieblichen Stütze (3, 21) auf die entsprechende Hebeleinrichtung (1, 2, 40) ausgeführten Kraft ($F_3$, 14, 15) senkrecht steht zu der Tangente an die Kontur (8, 9) im Abstützpunkt (10, 11).

12. Zuspanneinrichtung nach einem der Ansprüche 1 bis 11, **dadurch gekennzeichnet, dass** eine selbstlösende Charakteristik dadurch realisiert ist, indem entweder mindestens eine selbstlösende Kontur (8, 9) vorgegeben ist, bei der eine energieoptimierte Kontur derart verändert ist, dass in jedem Arbeitspunkt eine die Reibkraft überwindende Kraftkomponente in Richtung der Lösestellung entsteht, oder eine separate Löse-Einrichtung vorgesehen ist.

13. Zuspanneinrichtung nach einem der Ansprüche 1 bis 11, **dadurch gekennzeichnet, dass** eine selbstzuspannende Charakteristik dadurch realisiert ist, indem entweder mindestens eine selbstzuspannende Kontur (8, 9) vorgesehen ist, bei der eine energieoptimierte Kontur derart verändert ist, dass in jedem Arbeitspunkt eine die Reibkraft überwindende Kraftkomponente in Richtung der Vollbremsstellung entsteht oder eine separate Zuspann-Einrichtung vorgesehen ist.

14. Zuspanneinrichtung nach einem der Ansprüche 1 bis 13, **dadurch gekennzeichnet, dass** im Verstellbereich zwischen der den Bremsbeginn bestimmenden Nulllage und der Lüftstellung mindestens eine Kontur (8, 9) derart gestaltet ist, dass während des Übergangs von der Nulllage zur Lüftstellung oder umgekehrt keine Drehung am zweiten Hebel (2, 40) erfolgt, bzw. keine Bewegung des Hebelelementes (2, 40) erfolgt.

15. Zuspanneinrichtung nach mindestens einem der Ansprüche 1 bis 14, **dadurch gekennzeichnet, dass** die Krafterzeugungseinrichtung (28) ortsfest am Gehäuse angeordnet ist.

16. Zuspanneinrichtung nach einem der Ansprüche 9 bis 15, **dadurch gekennzeichnet, dass** ein der Lüftstellung entsprechender Anschlag (33) zur Begrenzung des Verstellbereichs der Rollenanordnung (21) vorgesehen ist.

17. Zuspanneinrichtung nach einem der Ansprüche 9 bis 16, **dadurch gekennzeichnet, dass** ein der Vollbremsstellung entsprechender Anschlag (32) zur Begrenzung des Schwenkbereiches eines Hebels (1) vorgesehen ist.

18. Zuspanneinrichtung nach Anspruch 17, **dadurch gekennzeichnet, dass** der Anschlag (32) gleichzeitig zur Begrenzung des Verstellbereiches der Rollenanordnung (21) für die Vollbremsstellung dient.

19. Zuspanneinrichtung nach einem der vorstehenden Ansprüche, **dadurch gekennzeichnet, dass** zur Realisierung einer Feststellbrems-Funktion in der Zuspanneinrichtung an einer Stelle, die einer hinreichend großen Bremsen-Zuspannung entspricht, eine lösbare Arretiereinrichtung vorgesehen ist.

20. Zuspanneinrichtung nach einem der vorstehenden Ansprüche, **dadurch gekennzeichnet, dass** eine Einrichtung zur Nachstellung des Verschleißes der Bremsbeläge (22) vorgesehen ist.

21. Zuspanneinrichtung nach mindestens einem der vorstehenden Ansprüche, **dadurch gekennzeichnet, dass** das Kraftaufnahmesystem (22, 24, 25, 34) mit dem ersten Hebel (1) kraftschlüssig verbunden ist.

**Claims**

1. Force-applying device for wheel brakes with the following features:

   a) a force-generating device (128) for generating an actuation stroke for a wheel brake (125) is provided;
   b) the force-generating device (128) acts on a force-receiving system (122, 124, 125, 134), which develops a reaction force ($F_2$, 122) varying with the stroke;
   c) the force-generating device (128) is supported with respect to the reaction force ($F_2$, 122) on the housing of the force-applying device;
   d) the change in reaction force ($F_2$, 122) is based on an elastic deformation and increases substantially linearly or decreases correspondingly linearly;
   e) a device (101, 102, 103, 104, 105, 121, 126, 127, 135) for force regulation is provided, this being disposed between the force-generating device (128) and the force-receiving system (122, 124, 125, 134);
   f) an adjustment device (130) acting on the force regulation device (101, 102, 103, 104, 105, 121, 126, 127, 135) for changing the force acting on the force-receiving system (122, 124, 125, 134) is provided;
   g) the force-generating device (128) is formed such that when there is an increase in the force acting on the force-receiving system (122, 124, 125, 134) initiated by the adjustment device (130), it is able to release part of the energy ($E_1$) stored in it;
   h) the force-generating device (128) is formed such that when there is a reduction in the force acting on the force-receiving system (122, 124, 125, 134) initiated by the adjustment device, it is able to absorb again, at least in part, the energy ($E_2$) taken up by the force-receiving system (122, 124, 125, 134);
   i) the force regulation device (101, 102, 103, 104, 105, 121, 126, 127, 135) is in the form of a variable-ratio transmission system, which determines the force transmission between the reaction force ($F_2$, 112) developed by the force-receiving system (122, 124, 125, 134) and the force ($F_1$, 113) of the force-generating device (128);
   j) a first lever device (101) with a pivot point (104) which is fixed relative to the housing is provided in the housing, said lever device acting via a point of application of force (106) with a predetermined lever arm length (102, 117) on the force-receiving system (122, 124, 125, 134);
   k) a connecting link (102, 140) is provided in the transmission system, on which the force-generating device (128) acts at a point (107) fixed relative to the connecting link;
   l) the connecting link (102, 140) transmits the force released by the force-generating device (128) onto the first lever device (101);
   m) wherein at least one lever device (1) has a specially formed outline (8, 9) fixed relative to the lever on the side facing the other lever device (2, 40) in each case and at least one of the outlines (8, 9) fixed relative to the lever is in the form of an energy-optimized outline, which guarantees through its form that the total energy in the force-generating device (28) and in the force-receiving system (22, 24, 25, 34), respectively, in each working point is constant.

2. Force-applying device according to Claim 1, **characterized in that** the connecting link (2, 40) is in the form of a second lever device (2) with a pivot point (5) fixed relative to the housing and the force acts on a point of application of force (7) with a predetermined lever arm length ($C_1$, 16).

3. Force-applying device according to Claim 1, **characterized in that** the connecting link (2, 40) is in the form of a steering-guided (42) lever element (40) and the force is applied at a point of application of force (7) fixed relative to the lever element.

4. Force-applying device according to Claim 3, **characterized in that** a linear guide of the lever element (40) is achieved **in that** the moment pole (41) of the steering-guided (42) lever element (40) is positioned into infinity.

5. Force-applying device according to Claim 1, **characterized in that** the connecting link (2, 40) is in the form of a lever element (40) guided by a linear guide (48) fixed relative to the housing.

6. Force-applying device according to Claim 4 or 5, **characterized in that** the lever element (40) has a planar surface on its side (9) facing the first lever device (1).

7. Force-applying device according to one of the Claims 1 to 6, **characterized in that** a displaceable support (3, 21) which is not fixed is provided to transmit force between the first lever device (1) and the connecting link (2, 40), wherein a first link is formed at the point of contact (10) between the support (3, 21) and the first lever device (1) and a second link is formed at the point of contact (11) between the support (3, 21) and the connecting link (2, 40).

8. Force-applying device according to Claim 7, **characterized in that** the transmission of force is determined by the position of the support (3, 21) relative to the housing.

9. Force-applying device according to Claim 7 or 8, **characterized in that** the support (3, 21) is in the form of a roller arrangement (21) with at least one roller (26, 27).

10. Force-applying device according to one of Claims 1 to 9, **characterized in that** the outline is fixed relative to the lever (8, 9) and is configured equidistant to the energy-optimized outline.

11. Force-applying device according to one of Claims 1 to 10, **characterized in that** at least one of the outlines (8, 9) fixed relative to the lever is realized such that the direction of the force ($F_3$, 14, 15) exerted by the displaceable support (3, 21) onto the corresponding lever device (1, 2, 40) is perpendicular to the tangent to the outline (8, 9) at the support point (10, 11).

12. Force-applying device according to one of Claims 1 to 11, **characterized in that** a self-releasing characteristic is achieved **in that** either at least one self-releasing outline (8, 9) is defined, in which case an energy-optimized outline is varied such that a force component overcoming the frictional force in the direction of the release position is produced at each working point or a separate release mechanism is provided.

13. Force-applying device according to one of Claims 1 to 11, **characterized in that** a self-force-applying characteristic is achieved, **in that** either at least one self-force-applying outline (8, 9) is provided, in which case an energy-optimized outline is varied such that a force component overcoming the frictional force in the direction of the emergency braking position is produced or a separate force-applying device is provided.

14. Force-applying device according to one of Claims 1 to 13, **characterized in that** in the adjustment range between the zero position determining the start of braking and the air position at least one outline (8, 9) is formed, such that during the transition from the zero position to the air position or vice versa no rotation takes place at the second lever (2, 40) or no movement of the lever element (2, 40) takes place.

15. Force-applying device according to at least one of Claims 1 to 14, **characterized in that** the force-generating device (28) is arranged fixed to the housing.

16. Force-applying device according to one of Claims 9 to 15, **characterized in that** a limit stop (33) corresponding to the air position is provided to delimit the adjustment range of the roller arrangement (21).

17. Force-applying device according to one of Claims 9 to 16, **characterized in that** a limit stop (32) corresponding to the emergency braking position is provided to delimit the pivoting range of a lever (1).

18. Force-applying device according to Claim 17, **characterized in that** the limit stop (32) is simultaneously used to delimit the adjustment range of the roller arrangement (21) for the emergency braking position.

19. Force-applying device according to one of the preceding claims, **characterized in that** in order to achieve a parking brake function in the force-applying device at a point which corresponds to a sufficiently great braking force application, a releasable stopping device is provided.

20. Force-applying device according to one of the preceding claims, **characterized in that** a device for adjusting the wear on the brake lining (22) is provided.

21. Force-applying device according to at least one of the preceding claims, **characterized in that** the force-receiving system (22, 24, 25, 34) is connected to the first lever (1) in a non-positive manner.

**Revendications**

1. Dispositif de serrage pour freins de roues, le dispositif présentant les caractéristiques suivantes :

   a) un dispositif (128) de production de force est prévu pour former une course d'actionnement d'un frein de roue (125),

   b) le dispositif (128) de production de force agit sur un système (12, 124, 125, 134) de reprise de force qui développe une force de réaction ($F_2$, 122) qui varie en fonction de la course,

   c) le dispositif (128) de production de force est soutenu par rapport à la force de réaction ($F_2$, 122) sur le boîtier du dispositif de serrage,

   d) la modification de la force de réaction ($F_2$, 122) repose sur une déformation élastique, augmente de manière essentiellement linéaire et diminue linéairement de manière correspondante,

   e) un dispositif (101, 102, 103, 104, 105, 121, 126, 127, 135) de dosage de force est prévu entre le dispositif (128) de production de force et le système (122, 124, 125, 134) de reprise de force,

   f) un dispositif d'ajustement (130) agissant sur le dispositif (101, 102, 103, 104, 105, 121, 126, 127, 135) de dosage de force est prévu pour modifier la force qui agit sur le système (122, 124, 125, 134) de reprise de force,

   g) le dispositif (128) de production de force est configuré de manière à pouvoir délivrer une partie de l'énergie ($E_1$) qu'il a accumulée lors d'une augmentation de la force qui agit sur le système (122, 124, 125, 134) de réception de force provoquée par le dispositif d'ajustement (130),

   h) le dispositif (128) de production de force est configuré de telle sorte que lors d'une diminution de la force qui agit sur le système (122, 124, 125, 134) de réception de force provoquée par le dispositif d'ajustement, il puisse reprendre au moins en partie l'énergie ($E_2$) accumulée par le système (122, 124, 125, 134) de reprise de force,

   i) le dispositif (101, 102, 103, 104, 105, 121, 126, 127, 135) de dosage de force est configuré comme transmission à rapport variable de transmission qui détermine le transfert de force entre la force de réaction ($F_2$, 112) développée par le système (122, 124, 125, 134) de réception de force et la force ($F_1$, 113) du dispositif (128) de production de force,

   j) la transmission présente un premier dispositif à levier (101) doté d'un point (104) d'articulation de rotation fixe sur le boîtier et qui agit sur le système (122, 124, 125, 134) de reprise de force par l'intermédiaire d'un point (106) d'application de force situé à une longueur prédéterminée (102, 117) du bras de levier,

   k) un organe intermédiaire (102, 140) sur lequel le dispositif (128) de production de force agit en un emplacement (107) fixe sur l'organe intermédiaire est prévu dans la transmission,

   l) l'organe intermédiaire (102, 140) transfère sur le premier dispositif à levier (101) la force délivrée par le dispositif (128) de production de force,

   m) au moins un dispositif à levier (1) prévu sur le côté tourné vers l'autre dispositif à levier (2, 40) dispose d'un contour fixe (8, 9) de forme spéciale et au moins un des contours (8, 9) du levier est configuré comme contour d'optimisation d'énergie qui garantit par sa configuration qu'en chaque point de travail, la somme des énergies présentes dans le dispositif (28) de production de force et dans le système (22, 24, 25, 34) de reprise de force soit constante.

2. Dispositif de serrage selon la revendication 1, **caractérisé en ce que** l'organe intermédiaire (2, 40) est configuré comme deuxième dispositif à levier (2) doté d'un point (5) d'articulation de rotation fixe sur le boîtier et **en ce que** la force agit sur un point (7) d'application de force à une longueur prédéterminée ($C_1$, 16) du bras de levier.

3. Dispositif de serrage selon la revendication 1, **caractérisé en ce que** l'organe intermédiaire (2, 40) est configuré comme élément à levier (40) guidé par bielle (42), la force agissant sur un point (7) d'application de force fixe sur l'élément à levier.

4. Dispositif de serrage selon la revendication 3, **caractérisé en ce qu'**un guidage linéaire de l'élément à levier (40) est réalisé par le fait que le pôle momentané (41) de l'élément à levier (40) guidé par bielle (42) est disposé à l'infini.

5. Dispositif de serrage selon la revendication 1, **caractérisé en ce que** l'organe intermédiaire (2, 40) est configuré comme élément à levier (40) guidé par un guide linéaire (48) fixe sur le boîtier.

6. Dispositif de serrage selon les revendications 4 ou 5, **caractérisé en ce que** l'élément à levier (40) dispose d'une surface plane sur son côté (9) tourné vers le premier dispositif à levier (1).

7. Dispositif de serrage selon l'une des revendications 1 à 6, **caractérisé en ce qu'**un appui (3, 21) mobile non fixe est prévu pour le transfert de force entre le premier dispositif à levier (1) et l'organe intermédiaire (2, 40), une première articulation étant formée au point de contact (10) de l'appui (3, 21) avec le premier dispositif à levier (1) et une deuxième articulation étant formée au point de contact (11) de l'appui (3, 21) avec l'organe intermédiaire (2, 40).

**8.** Dispositif de serrage selon la revendication 7, **caractérisé en ce que** le transfert de force est déterminé par l'emplacement de l'appui (3, 21) par rapport au boîtier.

**9.** Dispositif de serrage selon les revendications 7 ou 8, **caractérisé en ce que** l'appui (3, 21) est configuré comme système de roulement (21) doté d'au moins un galet (26, 27).

**10.** Dispositif de serrage selon l'une des revendications 1 à 9, **caractérisé en ce que** le contour (8, 9) fixe du levier est configuré comme équidistante à un contour optimal en termes d'énergie.

**11.** Dispositif de serrage selon l'une des revendications 1 à 10, **caractérisé en ce qu'**au moins l'un des contours (8, 9) fixe sur le levier est réalisé de telle sorte que la direction de la force ($F_3$, 14, 15) exercée par l'appui coulissant (3, 21) sur le dispositif à levier (1, 2, 40) correspondant est perpendiculaire à la tangente au contour (8, 9) au point d'appui (10, 11).

**12.** Dispositif de serrage selon l'une des revendications 1 à 11, **caractérisé en ce qu'**une caractéristique d'autodéclenchement est réalisée par le fait qu'au moins un contour (8, 9) d'autodéclenchement est prévu dans lequel un contour optimisé en termes d'énergie est modifié de telle sorte qu'en chaque point de travail, une composante qui surmonte la force de frottement apparaît dans la direction du déclenchement, ou par le fait qu'un dispositif séparé de déclenchement est prévu.

**13.** Dispositif de serrage selon l'une des revendications 1 à 11, **caractérisé en ce qu'**une caractéristique d'auto-serrage est réalisée par le fait qu'au moins un contour (8, 9) d'auto-serrage est prévu dans lequel un contour optimisé en termes d'énergie est modifié de telle sorte qu'en chaque point de travail, une composante de force qui surmonte la force de frottement survient dans la direction de la position de freinage plein ou qu'un dispositif séparé de serrage est prévu.

**14.** Dispositif de serrage selon l'une des revendications 1 à 13, **caractérisé en ce que** dans la plage d'ajustement entre la position nulle qui détermine le début du freinage et la position d'aération, au moins un contour (8, 9) est configuré de telle sorte que pendant le passage entre la position nulle et la position d'aération ou inversement, aucune rotation n'a lieu sur le deuxième levier (2, 40) ou aucun déplacement de l'élément de levier (2, 40) n'a lieu.

**15.** Dispositif de serrage selon au moins l'une des revendications 1 à 14, **caractérisé en ce que** le dispositif (28) de production de force est disposé en position fixe sur le boîtier.

**16.** Dispositif de serrage selon l'une des revendications 9 à 15, **caractérisé en ce qu'**une butée (33) qui correspond à la position d'aération est prévue pour limiter la plage d'ajustement de l'ensemble de roulement (21).

**17.** Dispositif de serrage selon l'une des revendications 9 à 16, **caractérisé en ce qu'**une butée (32) qui correspond à la position de plein freinage est prévue pour limiter la plage de pivotement d'un levier (1).

**18.** Dispositif de serrage selon la revendication 17, **caractérisé en ce que** la butée (32) sert à la fois à limiter la plage d'ajustement de l'ensemble de roulement (21) pour la position de freinage plein.

**19.** Dispositif de serrage selon l'une des revendications précédentes, **caractérisé en ce que** pour réaliser une fonction de frein de stationnement, un dispositif libérable de blocage est prévu dans le dispositif de serrage en un emplacement qui correspond à un serrage suffisamment élevé des freins.

**20.** Dispositif de serrage selon l'une des revendications précédentes, **caractérisé en ce qu'**un dispositif d'adaptation à l'usure des garnitures de freins (22) est prévu.

**21.** Dispositif de serrage selon au moins l'une des revendications précédentes, **caractérisé en ce que** le système (22, 24, 25, 34) de reprise de force est relié en correspondance mécanique au premier levier (1).

Fig. 1

Fig. 2

Fig. 3

Fig. 4

Fig. 5

Fig. 6

Fig. 7

Normierte Kraftübersetzung $i/(b_{max}/c_2)$

$i(b_{max}/c_2)$

$b/b_{max}$

- $c/b_{max}$ = unendl.
- $c/b_{max}$ = 4
- $c/b_{max}$ = 2
- $c/b_{max}$ = 1,5

Fig. 8

**EP 1 244 879 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0644358 B1
- DE 3718944 C2
- DE 944351 C
- DE 2917936 A